(19)

**Europäisches Patentamt**
**European Patent Office**
**Office européen des brevets**

(11) **EP 1 887 063 A1**

(12) **EUROPEAN PATENT APPLICATION**

(43) Date of publication:
**13.02.2008 Bulletin 2008/07**

(51) Int Cl.:
*C09J 133/08* (2006.01)  *C09J 133/10* (2006.01)
*C08F 2/22* (2006.01)

(21) Application number: **07015016.4**

(22) Date of filing: **31.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **03.08.2006 JP 2006212404**

(71) Applicant: **NITTO DENKO CORPORATION**
**Osaka (JP)**

(72) Inventors:
• **Takahashi, Akiko**
  **Ibaraki-shi**
  **Osaka 567-8680 (JP)**
• **Ikeya, Mami**
  **Ibaraki-shi**
  **Osaka 567-8680 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Method for producing aqueous pressure-sensitive adhesive composition**

(57)    A method for producing an aqueous pressure-sensitive adhesive (PSA) composition suitable to form a PSA sheet which exhibits high level of adhesive strength, cohesive strength under high temperature conditions and edge peeling resistance in a well-balanced manner is provided. The method comprises subjecting a monomer material to emulsion polymerization to obtain an aqueous emulsion of an acrylic polymer; and adding a crosslinking agent to the emulsion to obtain an aqueous PSA composition. The emulsion polymerization is carried out so as to obtain an acrylic polymer having a mass ratio of the ethyl acetate-insoluble matter of 3% or greater, but 15% or less and a weight average molecular weight of the THF-soluble matter of $70 \times 10^4$ or greater, but $100 \times 10^4$ or less. The crosslinking agent is added such that the mass ratio of the ethyl acetate-insoluble matter with respect to a post-crosslinking PSA 40% or greater, but 70% or less.

Fig. 1

**Description**

**BACKGROUND OF THE INVENTION**

**1. Field of the Invention**

The present invention relates to an aqueous emulsion type pressure-sensitive adhesive composition including an acrylic polymer as a main component, a method for producing the same, and a pressure-sensitive adhesive sheet using the same.

The present application is filed claiming the benefit of the priority based upon Japanese Patent Application No. 2006-212404 filed on August 3, 2006, the entirely of which is incorporated herein by reference.

**2. Description of the Related Art**

An aqueous dispersion type (aqueous) pressure-sensitive adhesive composition, in which an acrylic polymer is dispersed in water, uses water as the dispersion medium and so is preferable to a solvent type pressure-sensitive adhesive composition in terms of environmental sanitation. Such an acrylic polymer-based aqueous pressure-sensitive adhesive composition is advantageous in producing a pressure-sensitive adhesive layer and a pressure-sensitive adhesive sheet containing the pressure-sensitive adhesive layer superior in solvent resistance.

In such circumstances, an acrylic polymer-based aqueous pressure-sensitive adhesive composition usable for producing a pressure-sensitive adhesive sheet which provides a higher level of performance is in demand. For example, a method for appropriately producing an acrylic polymer-based aqueous pressure-sensitive adhesive composition providing a pressure-sensitive adhesive sheet which can exhibit a plurality of characteristics such as adhesive strength (pressure-sensitive adhesive force), cohesive strength under high temperature conditions (high temperature holding power), and edge peeling resistance, at a high level in a well-balanced manner is useful.

In an attempt to improve the performance of an acrylic aqueous pressure-sensitive adhesive composition, studies are conducted on the structure of polymers contained in the composition (for example, average molecular weight). For example, Japanese Patent Application Publication No. 2004-189933 describes a pressure-sensitive adhesive composition having an oxazoline-containing water-dispersed crosslinking agent mixed in a water-dispersed copolymer having weight average molecular weight of $100 \times 10^4$ or greater". Japanese Patent Application Publication No. 2-150482 describes a pressure-sensitive adhesive composition containing a water-dispersed copolymer having a weight average molecular weight of $20 \times 10^4$ to $80 \times 10^4$ (I) and a polymer having a weight average molecular weight of $20 \times 10^4$ to $80 \times 10^4$ obtained by polymerizing monomer components containing an addition-polymerizable oxazoline (II). Other conventional art documents include Japanese Patent Application Publications Nos. 2003-073637 and 8-165464.

However, none of the above-described conventional technologies is satisfactory as a method for producing a pressure-sensitive adhesive sheet for realizing the above-mentioned three characteristics at a higher level in a well-balanced manner and an aqueous pressure-sensitive adhesive composition suitable for forming such an adhesive sheet.

**SUMMARY OF THE INVENTION**

An object of the present invention is to provide a pressure-sensitive adhesive sheet which exhibits three characteristics, i.e., adhesive strength (pressure-sensitive adhesive force), cohesive strength under high temperature conditions (high temperature holding power) and edge peeling resistance, at a high level in a well-balanced manner. Another object of the present invention is to provide a method for producing an aqueous pressure-sensitive adhesive composition suitable for forming a pressure-sensitive adhesive layer contained in such a pressure-sensitive adhesive sheet. Still another object of the present invention is to provide an aqueous pressure-sensitive adhesive composition suitable for forming such a pressure-sensitive adhesive layer.

According to the present invention, a method for producing an aqueous (aqueous dispersion type) pressure-sensitive adhesive composition containing an acrylic polymer as a main component, which is dispersed in water, is provided. The method comprises subjecting a monomer material containing alkyl (meth)acrylate as a main monomer to emulsion polymerization to obtain an aqueous emulsion of the acrylic polymer; and adding a crosslinking agent to the aqueous emulsion to obtain an aqueous pressure-sensitive adhesive composition. The emulsion polymerization is carried out such that the mass ratio of the ethyl acetate-insoluble matter of the acrylic polymer (Ga) obtained by emulsion polymerization is about 3% or greater, but 15% or less and the weight average molecular weight of the tetrahydrofran (THF)-soluble matter of the acrylic polymer (Mw) is about $70 \times 10^4$ or greater, but $100 \times 10^4$ or less. The crosslinking agent is added such that the mass ratio of the ethyl acetate-insoluble matter with respect to the post-crosslinking pressure-sensitive adhesive (Gb) formed of the pressure-sensitive adhesive composition is about 40% or greater, but 70% or less.

Such a method can provide an acrylic aqueous pressure-sensitive adhesive composition (typically, an acrylic aqueous emulsion type pressure-sensitive adhesive composition) usable for producing a high performance pressure-sensitive adhesive (typically, in the form of a pressure-sensitive adhesive layer) which exhibits the three characteristics of adhesive strength (pressure-sensitive adhesive force), cohesive strength under high temperature conditions (high temperature holding power) and edge peeling resistance at a high level in a well-balanced manner.

An aqueous emulsion of the acrylic polymer is preferably obtained by a method comprising: supplying a first polymerization material containing a part of the monomer material to a reaction vessel and starting polymerization; and after the start of polymerization, supplying a second polymerization material containing another part of the monomer material (typically, all of the remaining part of the monomer material used for the emulsion polymerization, after the part to be contained in the first polymerization material is excluded) and having a different composition from that of the first polymerization material to undergo polymerization. Emulsion polymerization carried out in such a manner is suitable for synthesizing an acrylic polymer having mass ratio of the ethyl acetate-insoluble matter (Ga) and weight average molecular weight of the THF-soluble matter (Mw) in the preferable ranges disclosed herein. Using an acrylic polymer obtained by emulsion polymerization performed in such a manner, can be obtained a pressure-sensitive adhesive composition usable for forming a high performance pressure-sensitive adhesive. Therefore, such emulsion polymerization method may preferably be employed for obtaining an aqueous emulsion of acrylic polymer in a method for producing an pressure-sensitive adhesive composition disclosed herein.

The emulsion polymerization is preferably carried out in the manner where each of the first and second polymerization materials contain chain transfer agent. The chain transfer agent contained in the first polymerization material and the chain transfer agent contained in the second polymerization material may be the same as, or different from, each other. The concentration of chain transfer agent contained in the first polymerization material ($C_1$) and the concentration of chain transfer agent contained in the second polymerization material ($C_2$) can be represented by the following expressions:

$$\text{Concentration of Chain Transfer Agent in First Polymerization Material } (C_1)[\%] = (\text{Mass of Chain Transfer Agent Contained in First Polymerization Material/Mass of Monomer Material Contained in First Polymerization Material}) \times 100;$$

and

$$\text{Concentration of Chain Transfer Agent in Second Polymerization Material } (C_2)[\%] = (\text{Mass of Chain Transfer Agent Contained in Second Polymerization Material/Mass of Monomer Material Contained in Second Polymerization Material}) \times 100.$$

It is preferable to carry out emulsion polymerization with the compositions of the first polymerization material and the second polymerization material being set such that concentrations $C_1$ and $C_2$ fulfill $C_1 < C_2$ (i.e., the concentration of chain transfer agent in the second polymerization material ($C_2$) is higher than the concentration of chain transfer agent in the first polymerization material ($C_1$)).

In one preferable embodiment of the emulsion polymerization carried out with chain transfer agent, the first polymerization material contains 10 to 45% by mass of the total amount of chain transfer agent used for the emulsion polymerization. By emulsion polymerization carried out in such a manner, can be appropriately synthesized an acrylic polymer having mass ratio of the ethyl acetate-insoluble matter (Ga) and weight average molecular weight of the THF-soluble matter (Mw) in the preferable ranges disclosed herein.

In one preferable embodiment, the first polymerization material contains about 20 to 60% by mass of the total amount of monomer material, and the second polymerization material contains the remaining amount (i.e., the remaining amount after the amount to be contained in the first polymerization material is subtracted from the total amount of the monomer material). In other words, the monomer material is distributed at a mass ratio of about 20:80 to 60:40 among the first and second polymerization materials. With an acrylic polymer obtained by emulsion polymerization performed in this manner, can be produced a pressure-sensitive adhesive composition providing a high performance pressure-sensitive adhesive.

The method for producing a pressure-sensitive adhesive composition disclosed herein may further comprise adding a tackifier to the aqueous emulsion of the acrylic polymer. The blend ratio of tackifier may be about 5 to 30 parts by mass (based on the solid content) with respect to 100 parts by mass of the acrylic polymer contained in the emulsion. Such method can produce a pressure-sensitive adhesive composition providing a pressure-sensitive adhesive which realizes the three characteristics of adhesive strength (pressure-sensitive adhesive force), cohesive strength under high temperature conditions and edge peeling resistance at a higher level in a well-balanced manner.

According to the present invention, is provided an aqueous pressure-sensitive adhesive composition containing acrylic polymer as a main component, which is dispersed in water. The pressure-sensitive adhesive composition comprises an aqueous emulsion wherein acrylic polymer obtained by polymerization (typically, emulsion polymerization) of a monomer containing alkyl (meth)acrylate as a main monomer is dispersed in water. The mass ratio of the ethyl acetate-insoluble matter of the acrylic polymer (Ga) is about 3% or greater, but 15% or less and the weight average molecular weight of the THF-soluble matter of the acrylic polymer (Mw) is about $70 \times 10^4$ or greater, but $100 \times 10^4$ or less. The pressure-sensitive adhesive composition further comprises a crosslinking agent which is added into the aqueous emulsion such that the mass ratio of the ethyl acetate-insoluble matter with respect to the post-crosslinking pressure-sensitive adhesive agent (Gb) formed of the pressure-sensitive adhesive composition is 40% or greater, but 70% or less.

Such a pressure-sensitive adhesive composition can provide a pressure-sensitive adhesive which realizes the three characteristics of adhesive strength (pressure-sensitive adhesive force), cohesive strength under high temperature conditions and edge peeling resistance at a high level in a well-balanced manner, and also a pressure-sensitive adhesive sheet containing such an adhesive (typically, in the form of a pressure-sensitive adhesive layer).

The pressure-sensitive adhesive composition disclosed herein may further comprise a tackifier. The blend ratio of tackifier may be, for example, about 5 to 30 parts by mass (based on the solid content) with respect to 100 parts by mass of the acrylic polymer. A pressure-sensitive adhesive composition having such a composition can provide a pressure-sensitive adhesive which realizes the above-mentioned three characteristics at a higher level in a well-balanced manner, and also a pressure-sensitive adhesive sheet containing such an agent (typically, in the form of a pressure-sensitive adhesive layer).

The present invention provides a pressure-sensitive adhesive sheet, which contains a "pressure-sensitive adhesive layer formed of any of the pressure-sensitive adhesive compositions disclosed herein (may be a pressure-sensitive adhesive composition produced by any of the methods disclosed herein)". A pressure-sensitive adhesive sheet having such a structure can be a high performance sheet providing the three characteristics of adhesiveness (pressure-sensitive adhesive force), cohesive strength under high temperature conditions and edge peeling resistance at a high level in a well-balanced manner.

## BRIEF DESCRIPTION OF THE DRAWINGS

Figs. 1 and 2 are each a cross-sectional view schematically showing an example of a structure of a pressure-sensitive adhesive sheet according to the present invention;
Figs. 3 and 4 are each a cross-sectional view schematically showing an example of a structure of a pressure-sensitive adhesive sheet according to the present invention; and
Figs. 5 and 6 are each a cross-sectional view schematically showing an example of a structure of a pressure-sensitive adhesive sheet according to the present invention.

## DETAILED DESCRIPTION OF THE INVENTION

Hereinafter, preferable embodiments according to the present invention will be described. The matter which is other than that specifically referred to in this specification but is necessary for carrying out the present invention may be understood as a matter of design choice for those skilled in the art based on the conventional art. The present invention can be carried out based on the contents disclosed in this specification and the technological common knowledge in the art.

An acrylic polymer in the technology disclosed herein is a polymer obtained by polymerization (typically emulsion polymerization) of a predetermined monomer material. The monomer material contains, as a main monomer (main monomer component), alkyl (meth)acrylate, i.e., (meth)acrylic ester of alkylalcohol. Herein, the term "(meth)acrylic" encompasses "acrylic" and "methacrylic". The expression "containing alkyl (meth)acrylate as a main monomer" means that the amount of the alkyl (meth)acrylate (in the case where two or more types of alkyl (meth)acrylate are contained, the total amount thereof) with respect to the total amount of the monomer material exceeds 50% by mass. The amount of alkyl (meth)acrylate may be, for example, in the range of more than 50% by mass to 99.8% by mass or less with respect to the total amount of the monomer material. A monomer material of which the alkyl (meth)acrylate content is about 80% by mass or greater (typically, about 80 to 99.8% by mass) is preferable, and a monomer material of which the alkyl (meth)acrylate is about 85% by mass or greater (typically, about 85 to 99.5% by mass) is more preferable. The proportion of the alkyl (meth)acrylate with respect to the monomer material may be about 90% by mass or greater (typically, about 90 to 99% by mass). Normally, this proportion generally corresponds to the (co)polymerization ratio of the alkyl (meth)acrylate in the acrylic polymer obtained by polymerization of the monomer material.

The alkyl (meth)acrylate contained in the monomer material may be one, or two or more, selected from the compounds represented by the following expression (1):

$$CH_2 = C(R^1)COOR^2 \qquad (1)$$

In expression 1, $R^1$ is a hydrogen atom or a methyl group. $R^2$ is an alkyl group having 1 to 20 carbon atoms. Specific examples of $R^2$ include methyl group, ethyl group, propyl group, isopropyl group, butyl group, isobutyl group, pentyl group, isopentyl group, hexyl group, heptyl group, 2-ethylhexyl group, isooctyl group, isononyl group, isodecyl group and the like. Among these groups, alkyl group having 2 to 14 carbon atoms(hereinafter, such range for the number of carbon atoms may be represented as "$C_{2-14}$") is preferable, and alkyl group having $C_{2-10}$ (for example, butyl group, 2-ethylhexyl group, etc.) is more preferable.

In one preferable embodiment of the present invention, about 70% by mass or greater (more preferably, 90% by mass or greater) of the alkyl (meth)acrylate contained in the monomer material is (meth)acrylic ester of alkylalcohol in which $R^2$ is $C_{2-10}$ (more preferably, $C_{4-8}$). Substantially the entirety of the alkyl (meth)acrylate contained in the monomer material may be $C_{2-10}$ alkyl (more preferably, $C_{4-8}$ alkyl) (meth)acrylate. Such a monomer material may contain, as the alkyl (meth)acrylate, for example, only butyl acrylate, only 2-ethylhexyl acrylate, or both butyl acrylate and 2-ethylhexyl acrylate. In such a monomer material containing butyl acrylate and/or 2-ethylhexyl acrylate as alkyl (meth)acrylate, the content proportions (mass ratio) between butyl acrylate (BA) and 2-ethylhexyl acrylate (2EHA) may be, for example, BA/2EHA = about 0/100 to about 100/0 (preferably, about 0/100 to about 70/30, more preferably, about 5/95 to about 60/40).

The monomer material may contain, in addition to alkyl (meth)acrylate as the main monomer, other monomers (copolymerization components) as optional components. The "other monomer" may be one, or two or more, selected from various monomers copolymerizable with the alkyl (meth)acrylate used herein. The "other monomer" may be, for example, any of various ethylenic unsaturated monomers containing one, or two or more, ethylenic unsaturated groups such as acryloyl group, methacryloyl group, vinyl group or the like in the molecule (hereinafter, acryloyl group and methacryloyl group may occasionally be collectively referred to as "(meth)acryloyl goup").

Non-limiting examples of the monomers usable as the "other monomer" include ethylenic unsaturated monomers having any of the following various functional groups (hereinafter, such monomers may occasionally be referred to as "functional group-containing monomers").

Ethylenic unsaturated monomers having carboxyl group such as, for example, ethylenic unsaturated monocarboxylic acids such as acrylic acid, methacrylic acid, crotonic acid or the like; ethylenic unsaturated dicarboxylic acids such as maleic acid, itaconic acid, citraconic acid or the like and anhydrides thereof.

Ethylenic unsaturated monomers having amino group such as, for example, N-alkylaminoalkyl (meth)acrylates such as N-methylaminoethyl (meth)acrylate, N-ethylaminoethyl (meth)acrylate, N-t-butylaminoethyl (meth)acrylate or the like; N,N-dialkylaminoalkyl (meth)acrylates such as N,N-dimethylaminoethyl (meth)acrylate, N,N-diethylaminoethyl (meth)acrylate or the like.

Ethylenic unsaturated monomers having hydroxyl group such as, for example, hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate or the like; vinyl alcohol; allyl alcohol; N-methylolacrylamide; or the like.

Ethylenic unsaturated monomers having keto group such as diacetone (meth)acrylamide, diacetone (meth)acrylate, acetoacetoxymethyl (meth)acrylate or the like.

Ethylenic unsaturated monomers having amide group such as (meth)acrylamide, N,N-dimethyl (meth)acrylamide, N-methoxymethyl (meth)acrylamide, N-butoxymethyl (meth)acrylamide or the like.

Ethylenic unsaturated monomers having epoxy group such as glycidyl (meth)acrylate, allyl glycidyl ether or the like.

Ethylenic unsaturated monomers having alkoxysilyl group such as 3-(meth)acryloyloxypropyltrimethoxysilane, 3-(meth)acryloyloxypropyltriethoxysilane, vinyltrimethoxysilane or the like.

One, or a combination of two or more, of such functional monomers may be used. Preferable examples of functional group-containing monomers used include ethylenic unsaturated monomers having carboxyl group (more preferably, ethylenic unsaturated monocarboxylic acids). Among these, acrylic acid and/or methacrylic acids are preferably used.

In a monomer material containing such a functional group-containing monomer, the amount of the functional group-containing monomer (in the case where two or more types of functional group-containing monomers are included, the total amount thereof) with respect to 100 parts by mass of alkyl (meth)acrylate may be, for example, about 12 parts by mass or less (typically, about 0.5 to 12 parts by mass). This amount may be about 8 parts by mass or less (typically, about 1 to 8 parts by mass) with respect to 100 parts by mass of alkyl (meth)acrylate.

The functional group-containing monomer can be used as a component of the monomer material along with alkyl (meth)acrylate as the main monomer and may be useful to introduce a crosslinking point to the acrylic polymer which is to be obtained from the monomer material. Namely, such a functional group (crosslinkable functional group) can be a crosslinking point involved in the crosslinking reaction (typically, thermal crosslinking reaction) with the functional group contained in the crosslinking agent mixed in the acrylic polymer and/or the functional group contained in the acrylic polymer (may be a crosslinkable functional group introduced by copolymerizing functional group-containing monomer having the same or a different functional group to be reacted). Accordingly, the type and the mass ratio (copolymerization ratio) of an above-listed functional group-containing monomer can be set in accordance with the type and amount of the crosslinking agent to be used, the type of the crosslinking reaction, the desired degree of crosslinking (crosslinking density), and the like. For example, the type and the mass ratio (copolymerization ratio) can be set such that the mass ratio of the ethyl acetate-insoluble matter of the acrylic polymer (Ga) is in the preferable numerical range disclosed herein. The type and the mass ratio (copolymerization ratio) can be set such that the mass ratio of the ethyl acetate-insoluble matter of the post-crosslinking pressure-sensitive adhesive agent (Gb) is in the preferable numerical range disclosed herein.

Examples of "other monomers" mentioned above include multi-functional (meth)acrylates, namely, ethylenic unsaturated monomers having two or more (meth)acryloyl groups in the molecule, such as ethyleneglycol di(meth)acrylate, dipropyleneglycol di(meth)acrylate, hexanediol di(meth)acrylate, neopentylglycol di(meth)acrylate, trimethylolpropane tri(meth)acrylate, tetramethylolmethane tri(meth)acrylate, dipentaerythritol hexa(meth)acrylate and the like;. Such a multi-functional (meth)acrylate can be used as a component of the monomer material along with alkyl (meth)acrylate as the main monomer and may be useful to introduce a branched structure or crosslinked structure to the acrylic polymer which is to be obtained from the monomer material. In a monomer material containing such a multi-functional group-containing monomer, the ratio of the multi-functional group-containing monomer with respect to 100 parts by mass of alkyl (meth)acrylate may be, for example, about 10 parts by mass or less. The ratio may be about 5 parts by mass or less with respect to 100 parts by mass of alkyl (meth)acrylate. It is preferable to decide whether or not a multi-functional (meth) acrylate is used, and in the case where a multi-functional (meth) acrylate is used, the type and ratio thereof, such that, for example, the mass ratio of the ethyl acetate-insoluble matter (Ga) and the weight average molecular weight of the THF-soluble matter of the acrylic polymer (Mw) are each in the preferable numerical range disclosed herein. The monomer material may contain substantially no multi-functional (meth)acrylate.

Further examples of monomers usable as "other monomers" mentioned above include ethylenic unsaturated monomers such as, vinyl esters such as vinyl acetate, vinyl propionate and the like; aromatic vinyl compounds such as styrene, α-methylstyrene, vinyltoluene and the like; (meth)acrylate esters of cyclic alcohols such as cyclopentyl (meth)acrylate, cyclohexyl (meth)acrylate, isobornyl (meth)acrylate and the like; (meth)acrylonitrile; n-(meth)acryloylmorpholine; N-vinyl-2-pyrrolidone; and the like. The ratio of such monomer to be used (in the case where two or more types of monomers are contained, the ratio of their total mass) with respect to 100 parts by mass of alkyl (meth)acrylate may be, for example, about 10 parts by mass or less. The ratio may be about 5 parts by mass or less with respect to 100 parts by mass of alkyl (meth)acrylate. The monomer material may contain substantially no such monomer.

The acrylic polymer in the technology disclosed herein is obtained by polymerization (typically, emulsion polymerization) of monomer material as described above. The mass ratio of the ethyl acetate-insoluble matter with respect to the acrylic polymer (hereinafter, may be referred to as the "gel fraction" of the acrylic polymer) (Ga) is generally in the range of 3% or greater, but 15% or less. When the gel fraction of the acrylic polymer is too low or too high as compared to the above range, it tends to be difficult that the pressure-sensitive adhesive or the pressure-sensitive adhesive sheet formed of a pressure-sensitive adhesive composition containing the acrylic polymer as the main component exhibits high level of adhesive strength (pressure-sensitive adhesive force), high temperature holding power and edge peeling resistance in a well-balanced manner. For example, when the gel fraction (Ga) is too low, the high temperature holding power is likely to be insufficient; whereas when the gel fraction (Ga) is too high, the edge peeling resistance is likely to be insufficient.

The "gel fraction of the acrylic polymer (Ga)" is measured by the following method.

<Method for measuring gel fraction of acrylic polymer (Ga)>

About 0.1 g acrylic polymer (mass: $W_{a1}$ mg) as a measuring sample is placed on tetrafluoroethylene porous membrane of 0.2 μm average pore diameter (mass: $W_{a2}$ mg), and the membrane with the measuring sample is tied with cotton yarn to form a bag (mass: $W_{a3}$ mg). This bag is placed into a screw tube of 50 mL volume(one screw tube is used for one bag), and the screw tube is filled with ethyl acetate. The screw tube in this state is left at room temperature (typically, at 23°C) for 7 days, and then the bag is removed from the screw tube and dried at 130°C for 2 hours. Then, the mass of the bag ($W_{a4}$ mg) is measured. The gel fraction of the acrylic polymer (Ga) is obtained by substituting the above values into the following expression.

$$Ga[\%] = [(W_{a4} - W_{a2} - W_{a3})/W_{a1}] \times 100$$

As the tetrafluoroethylene porous membrane, it is desirable to use trade name "Nitoflon (registered trademark) NTF1122" available from Nitto Denko Corporation (0.2 $\mu$m average pore diameter, 75% porosity, 0.085 mm thickness) or an equivalent thereof. As a measuring sample, for example, an aqueous emulsion of acrylic polymer may be used after drying at room temperature (typically, at about 20 to 30°C).

The weight average molecular weight of the THF-soluble matter of the acrylic polymer in the technology disclosed herein (hereinafter, may be referred to simply as "weight average molecular weight") (Mw) is generally in the range of $70 \times 10^4$ or greater, but $100 \times 10^4$ or less. When the weight average molecular weight (Mw) is too low as compared to the above range, it tends to be difficult that the pressure-sensitive adhesive or the pressure-sensitive adhesive sheet formed of a pressure-sensitive adhesive composition containing the acrylic polymer as the main component exhibits high level of adhesive strength (pressure-sensitive adhesive force), high temperature holding power and edge peeling resistance in a well-balanced manner. For example, the high temperature holding power and/or the edge peeling resistance may tend to be insufficient. By contrast, when the weight average molecular weight (Mw) is too higher than the above range, the gel fraction (Ga) measured by the above-described method is likely to be too high as compared to the above-mentioned preferable range, and the pressure-sensitive adhesive or sheet formed of a pressure-sensitive adhesive composition containing the acrylic polymer as the main component is likely to exhibit lower initial adhesive strength or tackiness. An acrylic polymer of which the THF-soluble matter has a weight average molecular weight (Mw) generally in the range of $80 \times 10^4$ or greater, but $99 \times 10^4$ or less can realize a pressure-sensitive adhesive composition providing a higher performance pressure-sensitive adhesive or the pressure-sensitive adhesive sheet.

The "weight average molecular weight of the THF-soluble matter of the acrylic polymer (Mw)" is measured by the following method.

<Method for measuring weight average molecular weight of acrylic polymer (Mw)>

Acrylic polymer is suspended in tetrahydrofran (THF) at room temperature (typically, at 23°C) for 7 days to elute the THF-soluble matter. Then, the THF-soluble matter is filtered out, the filtrate is concentrated or diluted as necessary (may be dried once and then redissolved in THF), and a THF solution containing the THF-soluble matter at an appropriate concentration (for example, about 0.1 to 0.3% by mass; in the examples described later, 0.2% by mass) is prepared. The THF solution is filtered through a filter of 0.45 $\mu$m average pore diameter to obtain the filtrate (sample solution for measuring the molecular weight). The weight average molecular weight of the filtrate in terms of equivalent standard polystyrene is obtained using gel permeation chromatography (GPC), and the resultant value is said to be the weight average molecular weight of the THF-soluble matter (Mw). As the GPC apparatus, for example, model name "HLC-8120GPC" available from Tosoh Corporation (column: TSKgel GMH-H(S)) may be used.

In the method for producing a pressure-sensitive adhesive composition disclosed herein, emulsion polymerization of an aforementioned monomer material is conducted such that an acrylic polymer having gel fraction (Ga) and weight average molecular weight (Mw) both in the above predetermined numerical ranges is obtained. As long as acrylic polymer having Ga and Mw in such ranges is obtained, procedures for the emulsion polymerization are not limited to any specific form. Emulsion polymerization may be carried out in substantially the same manner as that of conventionally known general emulsion polymerization methods, for example, using any of various known monomer addition methods, any of various known polymerization conditions (polymerization temperature, polymerization time, polymerization pressure and the like), and any of various known materials (polymerization initiator, surfactant, and the like). For example, as the monomer addition method, can be employed any one among the charging-in-one-portion method of adding the entire monomer material to the polymerization vessel at one time, gradual addition (dropping) method, portion-wise addition (dropping) method and the like. The monomer material may be partially or entirely mixed with water to be emulsified in advance and the resulting emulsion may be placed in the reaction vessel.

As the polymerization temperature, for example, about 20 to 100°C (typically, 40 to 80°C) may be adopted. Examples of usable polymerization initiators include, but not limited to, for example, azo initiators such as 2,2'-azobis-sisobutylonitrile, 2,2'-azobis(2-methylpropionamidine) disulfate, 2,2'-azobis(2-amidinopropane) dihydrochloride, 2,2'-azobis[2-(5-methyl-2-imidazoline-2-yl)propane] dihydrochloride, 2,2'-azobis(N,N'-dimethyleneisobutylamidine), 2,2'-azobis[N-(2-carboxyethyl)-2-methylpropionamidine] hydrate and the like; persulfates such as potassium persulfate, ammonium persulfates and the like; peroxide initiators such as benzoylperoxide, t-butyl hydroperoxide, hydrogen peroxide and the like; substituted ethane initiators such as phenyl-substituted ethane and the like; and redox initiators such as the combination of persulfate and sodium hydrogen sulfite, the combination of peroxide and sodium ascorbate, and the like. The amount of polymerization initiator may be, for example, 0.005 to 1 part by mass with respect to 100 parts by mass of the monomer material. As the method for adding the polymerization initiator, can be employed any one among the charging-in-one-portion method of adding substantially all the polymerization initiator to the polymerization vessel before adding the monomer material (typically, preparing an aqueous solution of the polymerization initiator in the reaction vessel), gradual (continuous)addition method, portion-wise addition method and the like. For example, the charging-in-one-portion method may be preferably adopted in terms of ease of polymerization operation, process management and the like.

Examples of usable emulsifiers (surfactants) include anionic emulsifiers such as sodium lauryl sulfate, ammonium lauryl sulfate, sodium dodecylbenzenesulfonate, sodium polyoxyethylenealkylethersulfate, ammonium polyoxyethylenealkylphenylethersulfate, sodium polyoxyethylenealkylphenylethersulfate and the like; and nonionic emulsifiers such as polyoxyethylenealkylether, polyoxyethylenealkylphenylether and the like. One, or a combination of two or more, of such emulsifiers may be used. The amount of emulsifier used may be, for example, about 0.2 to 10 parts by mass (preferably, about 0.5 to 5 parts by mass) with respect to 100 parts by mass of the monomer material.

For the polymerization, conventionally known various chain transfer agents (also understood as molecular weight adjusting agents or polymerization degree adjusting agents) may be used as necessary. Such chain transfer agent may be one, or two or more, selected from, for example, mercaptans such as dodecyl mercaptan (dodecanethiol), glycidyl mercaptan, 2- mercaptoethanol, mercaptoacetic acid, 2-ethylhexyl thioglycolate, 2,3-dimercapto-1-propanol and the like. Among these, dodecanethiol is preferable. The amount of chain transfer agent used may be, for example, about 0.001 to 0.5 parts by mass with respect to 100 parts by mass of the monomer material. The amount may be about 0.02 to 0.05 parts by mass.

Emulsion polymerization may be carried out such that the gel fraction (Ga) and the weight average molecular weight (Mw) of the obtained acrylic polymer are in the preferable numerical ranges disclosed herein. There is no specific limitation on means for adjusting the values of these characteristics (Ga and Mw). For example, the Ga and/or Mw values may be adjusted by appropriately setting various parameters (factors) known to affect the degree of polymerization (molecular weight) or the molecular structure of polymer. Specific examples of the parameters usable for adjusting the values of the characteristics include, for example, parameters regarding chain transfer agent such as whether or not to use chain transfer agent, and in the case where chain transfer agent is used, the type (compound) and amount thereof, the timing of addition to the reaction vessel, and the like; parameters regarding polymerization initiator such as the type (compound) and amount of polymerization initiator, the addition method (in one portion, gradual, portion-wise or the like) and timing of addition to the reaction vessel, and the like; parameters regarding monomer material such as the type and composition ratio of the monomer contained in the monomer material (for example, whether or not to use a functional-group containing monomer described above, and in the case where a functional-group containing monomer is used, the type thereof, the mass ratio thereof with respect to the total amount of the monomer material and the like), the addition method of the monomer material to the reaction vessel (in one portion, gradual, portion-wise or the like), the addition rate in the case of gradual (continuous) addition, and the like; polymerization temperature; polymerization time; and the solid content of the aqueous emulsion obtained by polymerization.

The general tendency of effects of these parameters on Ga or Mw can be understood as the technological common knowledge among those skilled in the art or can be easily understood by, for example, conducting simple preliminary experiments. For example, when the amount of chain transfer agent is increased while other parameters are kept fixed, Mw and Ga of the obtained acrylic polymer are likely to decrease in general. When a polymerization initiator having a higher ten hour half life temperature is used or the polymerization temperature is lowered while the other parameters are kept fixed, Mw and Ga of the obtained acrylic polymer are likely to increase in general. When the amount of polymerization initiator is increased while the other conditions are kept fixed, Mw and Ga of the obtained acrylic polymer are likely to decrease in general. The procedures for emulsion polymerization (polymerization conditions) can be set according to such technological common knowledge and/or the results of preliminary experiments, so that the values of the characteristics (Ga, Mw) can be adjusted to be in the preferable ranges.

As an emulsion polymerization method especially suitable for producing the acrylic polymer disclosed herein, may be employed a method where a plurality of (typically, two) polymerization materials comprising an above-mentioned monomer material distributed in different compositions are subjected to polymerization at different timing in the same reaction vessel (it is sufficient that at least their polymerization reactions start at different times). Hereinafter, such system of emulsion polymerization will be occasionally referred to as "multi-stage polymerization" (for example, where two different polymerization materials are used, referred to as "two-stage polymerization"). The polymerization materials (each containing a part of the monomer material) will be occasionally referred to as first polymerization material, second polymerization material, third polymerization material, and the like. The terms such as "first" and "second" designating polymerization material are used in order to identify each polymerization material, but do not specify the order of the polymerization starting times for the materials or the order of adding the materials to the reaction vessel. By such multi-stage polymerization (typically, two-stage polymerization), an acrylic polymer having Ga and Mw in the preferable ranges disclosed herein can be appropriately produced. Using a pressure-sensitive adhesive composition obtained by appropriately adding a crosslinking agent (adding such that a preferable Gb value disclosed herein is realized) to an aqueous emulsion of the acrylic polymer obtained by multi-stage polymerization, a higher performance pressure-sensitive adhesive or a pressure-sensitive adhesive sheet containing such adhesive can be formed.

Now, the multi-stage polymerization will be described in more detail. For easier understanding, two-stage polymerization will be described as an example. Under the scope of the present invention, multi-stage polymerization is not limited to two-stage polymerization.

In one preferable embodiment of two-stage polymerization, at least a part of the first polymerization material is allowed to polymerize in the presence of polymerization initiator in reaction vessel, and then a second polymerization material is added to the reaction vessel. As the method for adding each polymerization material to the reaction vessel, any of charging-in-one-portion method, gradual addition method, portion-wise addition method and the like is adoptable. The methods for adding the first and second polymerization materials may be the same as, or different from, each other. It is preferable to add both the first and second polymerization materials by gradual (continuous) addition method. The addition rate of polymerization material during the gradual addition may or may not be constant. The addition rate of the first polymerization material (based on the monomer material) and the addition rate of the second polymerization material (based on the monomer material) may be the same as, or different from, each other.

The addition of the second polymerization material may be started before (i.e., while the first polymerization material is still being added), following (nearly immediately) or after a certain time period (for example, about 30 minutes to 1 hour) from the completion of addition of the first polymerization material. In terms of ease of process management (for example, polymerization temperature control, control for output of liquid delivery pump to add polymerization materials to the reaction vessel, and the like), productivity and the like, it is preferable that, for example, the addition rates of the first and the second polymerization materials are about the same. It is also preferable that the addition of the second polymerization material is started following (nearly immediately) the completion of addition of the first polymerization material.

In one preferable embodiment, the first polymerization material is added to the reaction vessel as an emulsion obtained by emulsifying the monomer material contained in the polymerization material and other components used as necessary (for example, a chain transfer agent) with water (i.e., an emulsion of the monomer material). The second polymerization material is also added in the same manner. For emulsifying the monomer material, any of the conventionally known various emulsifiers may be used as necessary.

The polymerization initiator used for the polymerization may be substantially entirely prepared in the reaction vessel before the addition of the first polymerization material is started (charging-in-one-portion method). Alternatively, for example, a part of the polymerization initiator may be placed into the reaction vessel before the addition of the first polymerization material is started, while the remaining part thereof may be placed into the reaction vessel at about the same time when the addition of the second polymerization material is started (portion-wise addition method). Still alternatively, the polymerization initiator may be gradually added to the reaction vessel (preferably as a solvent solution, typically as an aqueous solution) (gradual addition method).

The composition difference between the first and the second polymerization materials may arise from a difference in components contained therein, a difference in ratios of the components contained therein (composition ratios), or the both of the two. The composition difference may be the composition difference in the monomer material (type and/or composition ratio of the monomer), or in other components (for example, presence/absence of chain transfer agent, or in the case where chain transfer agent is present, the amount thereof).

Such two-stage polymerization is preferably carried out using chain transfer agent. Chain transfer agent may be one, or two or more, selected from the above-listed chain transfer agents. Dodecanethiol is especially preferable. Chain transfer agent is typically used as a component of either one or both of the first and the second polymerization materials. For example, the polymerization material may be added to the reaction vessel as a mixture of the monomer material and the chain transfer agent of which the polymerization material is composed (preferably, in such a way where the chain transfer agent is dissolved in the monomer material). It is preferable that among the first and second polymerization materials, at least the second polymerization material contains chain transfer agent. More preferably, both the first and second polymerization materials contain chain transfer agent. With these, an acrylic polymer having Ga and Mw in the preferable ranges disclosed herein can be produced. For example, polymerization conditions can be easily set such that the values of these characteristics (Ga, Mw) are in the above-mentioned preferable ranges. The pressure-sensitive adhesive composition formed of such acrylic polymer mixed with crosslinking agent can provide a higher performance pressure-sensitive adhesive or a pressure-sensitive adhesive sheet including such pressure-sensitive adhesive. The chain transfer agent contained in the first polymerization material and the chain transfer agent contained in the second polymerization material may be the same as, or different from, each other. Usually, it is preferable that one same chain transfer agent (the same compound, for example, dodecanethiol) is contained in both the first and second polymerization materials.

In the embodiment wherein both the first and second polymerization materials contain chain transfer agent, the concentrations of the chain transfer agent contained in each polymerization material are represented by the following expressions.

$$\text{Concentration of Chain Transfer agent in First Polymerization Material } (C_1)[\%] =$$

$$\text{(Mass of Chain Transfer Agent Contained in First Polymerization Material/Mass of}$$

$$\text{Monomer Material Contained in First Polymerization Material)} \times 100;$$

and

$$\text{Concentration of Chain Transfer Agent in Second Polymerization Material}$$

$$(C_2)[\%] = \text{(Mass of Chain Transfer Agent Contained in Second Polymerization}$$

$$\text{Material/Mass of Monomer Material Contained in Second Polymerization Material)} \times 100.$$

$C_1$ and $C_2$ can be set (adjusted) so as to obtain an acrylic polymer having mass ratio of the ethyl acetate-insoluble matter (Ga) and weight average molecular weight of the THF-soluble matter (Mw) in the preferable ranges disclosed herein. As a guideline to set these conditions effectively, concentrations $C_1$ and $C_2$ may be both selected from the range of about 0.01 to 0.1% by mass (for example, about 0.02 to 0.05% by mass). Concentrations $C_1$ and $C_2$ may preferably be set in such a range and so as to provide (synthesize) an acrylic polymer having Ga and Mw in the above ranges.

$C_1$ and $C_2$ are preferably set such that the concentration of chain transfer agent in the second polymerization material ($C_2$) is higher than the concentration of chain transfer agent in the first polymerization material ($C_1$) (i.e., so as to fulfill $C_1 < C_2$). Owing to this, may be realized better effects of adopting two-stage polymerization to obtain an acrylic polymer. For example, an acrylic polymer having mass ratio of the ethyl acetate-insoluble matter (Ga) and weight average molecular weight of the THF-soluble matter (Mw) in the preferable ranges disclosed herein may be more appropriately synthesized. With an acrylic polymer synthesized in such an manner, a higher performance pressure-sensitive adhesive composition usable for forming a pressure-sensitive adhesive can be produced. It is preferable that $C_1$ and $C_2$ are set such that the concentration of chain transfer agent in the second polymerization material ($C_2$) is about 1.1 to 3 times the concentration of chain transfer agent in the first polymerization material ($C_1$) (i.e., such that $C_2/C_1$ is about 1.1 to 3). Where the weight average molecular weight of the THF-soluble matter (Mw) is to be in the preferable range disclosed here, when $C_2/C_1$ is too small, Ga may be likely to be insufficient; whereas when $C_2/C_1$ is too large, Ga may be likely to be excessive.

In one preferable embodiment, the first polymerization material contains about 10 to 45% by mass of the total amount of the chain transfer agent to be used in the emulsion polymerization (two-stage polymerization). In other words, the composition of the first polymerization material is set such that the mass proportion of the amount of chain transfer agent to be contained in the first polymerization material ($T_1$) to the total amount of chain transfer agent to be used in the emulsion polymerization ($T_{all}$), i.e., $T_1/T_{all}$, is within the range of about 10 to 45% by mass. The second polymerization material may, for example, contain the remaining part of the chain transfer agent ($T_{all} - T_1$, i.e., the remaining part after the part to be contained in the first polymerization material is subtracted from the total amount of the chain transfer agent). In such an embodiment, may be realized better effects of adopting two-stage polymerization to obtain an acrylic polymer. For example, an acrylic polymer having mass ratio of the ethyl acetate-insoluble matter (Ga) and weight average molecular weight of the THF-soluble matter (Mw) in the preferable ranges disclosed herein may be more appropriately synthesized. Where the weight average molecular weight of the THF-soluble matter (Mw) is to be in the preferable range disclosed here, when $T_1/T_{all}$ is too small, Ga may be likely to be excessive, whereas when $T_1/T_{all}$ is too large, Ga may be likely to be insufficient.

The mass of the chain transfer agent contained in the first polymerization material ($T_1$) may set to correspond to, for example, about 0.003 to 0.02% of the total amount of the monomer material ($M_{all}$) (i.e., $T_1/M_{all}$ is about 0.003 to 0.02%). Setting the mass ratio ($T_1/M_{all}$) of the chain transfer agent contained in the first polymerization material ($T_1$) to the total amount of the monomer material ($M_{all}$) within the above range is effective in synthesizing an acrylic polymer that realizes mass ratio of the ethyl acetate-insoluble matter (Ga) in the preferable range disclosed herein (i.e., adjusting the Ga of the obtained acrylic polymer to be in the preferable range). Namely, when $T_1/M_{all}$ is smaller, Ga is likely to increase; whereas when $T_1/M_{all}$ is larger, Ga is likely to decrease. Using this, Ga can be adjusted.

In such two-stage polymerization, the monomer material (the total amount) used for synthesizing an acrylic polymer is distributed at a predetermined ratio between and contained in the first polymerization material and second polymerization material. The distribution ratio (mass of the monomer material contained in the first polymerization material : mass of the monomer material contained in the second polymerization material) may be about 20:80 to 60:

40 by mass. The ratio may be about 30:70 to 55:45. In such an embodiment, may be realized better effects of adopting two-stage polymerization to obtain an acrylic polymer. For example, a pressure-sensitive adhesive composition providing a higher performance pressure-sensitive adhesive can be produced.

The monomer material (the total amount) may be equally distributed among the first and the second polymerization materials. In this case, the composition of the monomer material contained in the first polymerization material and the composition of the monomer material contained in the second polymerization material are both substantially the same as the composition of the entire monomer material. In one preferable embodiment, two-stage polymerization is carried out using the first and second polymerization materials containing the monomer material of the same composition, yet having different concentrations of chain transfer agent ($C_1$, $C_2$).

The monomer material (total amount) may be unequally distributed among the first and the second polymerization materials For example, a monomer material (total amount) containing monomer A and monomer B at a mass ratio of 1:1 may be distributed such that the first polymerization material contains more monomer A than monomer B and the second polymerization material contains more monomer B than monomer A. Alternatively, for example, such a monomer material (total amount) may be distributed such that the first polymerization material contains only monomer A as the monomer material and the second polymerization material contains only monomer B as the monomer material.

The acrylic polymer contained in an aqueous pressure-sensitive adhesive composition disclosed herein may be any acrylic polymer having mass ratio of the ethyl acetate-insoluble matter (Ga) and weight average molecular weight of the THF-soluble matter (Mw) in the above-described predetermined ranges, and is not limited to an acrylic polymer obtained by emulsion polymerization. The pressure-sensitive adhesive composition may contain, for example, an aqueous emulsion that has an acrylic polymer obtained by solution polymerization, photopolymerization, bulk polymerization or the like and is dispersed in water optionally using an emulsifier.

The aqueous pressure-sensitive adhesive composition disclosed herein is a composition containing an above-described acrylic polymer as the main component, which is dispersed in water. Herein, the expression "containing an above-described acrylic polymer as the main component" means that the mass proportion of the acrylic polymer to the nonvolatiles (solid content) contained in the composition exceeds 50% by mass. The proportion may exceed 70% by mass. The proportion of the nonvolatiles to the aqueous pressure-sensitive adhesive composition (that is, the solid content of the composition) may be, for example, within the range of about 30 to 80% by mass (typically, about 40 to 70% by mass).

In one preferable embodiment of the method for producing a pressure-sensitive adhesive composition disclosed herein, crosslinking agent is added to an aqueous emulsion of the acrylic polymer. In one preferable embodiment of the pressure-sensitive adhesive composition, the composition contains an aqueous emulsion of the acrylic polymer and crosslinking agent contained therein. As the crosslinking agent, any of various crosslinking agents generally used in the field of aqueous pressure-sensitive adhesive composition (typically, containing, as an effective component, a crosslinking compound having two or more crosslinkable functional groups in the molecule, which are reactive with the functional group contained in acrylic polymer) is usable with no limitation. Examples of usable crosslinking agents include, carbodiimide-based crosslinking agents, hydrazine-based crosslinking agents, isocyanate-based crosslinking agents, epoxy-based corsslinking agents, oxazoline-based crosslinking agents, aziridine-based crosslinking agents, metal chelate-basedcrosslinking agents, silane coupling agents and the like. Either water-soluble or oil-soluble crosslinking agent is usable. One, or a combination of two or more, of such crosslinking agents may be used. For the present invention, carbodiimide-based crosslinking agents and hydrazine-based crosslinking agents are especially preferable.

Commercially available carbodiimide-based crosslinking agents preferably used for the present invention are trade name "Carbodilite" series (available from Nissinbo Industries, Inc. This series of products include water-soluble type, emulsion type, solvent type, non-solvent type and the like. Any type is usable. Usually, water-soluble type or emulsion type is preferable. For example, water-soluble type "V-04" (grade name), emulsion type "E-04" (grade name) and the like may be preferably used. Such carbodiimide-based crosslinking agent may be contained at a ratio of, for example, about 0.1 to 1 part by mass (based on the solid content) with respect to 100 parts by mass of the acrylic polymer. The ratio may be about 0.2 to 0.6 parts by mass with respect to 100 parts by mass of the acrylic polymer. When carbodiimide-based crosslinking agent is used, it is preferable that the acrylic polymer is copolymerized with carboxyl group-containing monomer (especially preferably, acrylic acid and/or methacrylic acid). The polymerization ratio of the carboxyl group-containing monomer (generally corresponding to the composition of the monomer material) may be, for example, about 1 to 8 parts by mass with respect to 100 parts by mass of alkyl (meth)acrylate.

As the hydrazine-based crosslinking agent, various hydrazide compounds containing two or more hydrazino groups ($-NHNH_2$) as crosslinkable functional group in the molecule are usable. Saturated dicarboxylic acid dihydrazides such as glutaric acid dihydrazide, adipic acid dihydrazide and the like are preferable. Such hydrazide-based crosslinking agent may be contained at a ratio of, for example, about 0.05 to 0.5 parts by mass (based on the solid content) with respect to 100 parts by mass of the acrylic polymer. The ratio may be about 0.1 to 0.3 parts by mass with respect to 100 parts by mass of the acrylic polymer. When hydrazine-based crosslinking agent is used, it is preferable that the acrylic polymer is copolymerized with keto group-containing monomer (for example, diacetoneacrylamide). The polymerization ratio of the keto group-containing monomer (generally corresponding to the composition of the monomer material) may be, for example, about 0.1 to 5 parts by mass with respect to 100 parts by mass of alkyl (meth)acrylate.

A pressure-sensitive adhesive composition containing such a crosslinking agent may be dried and crosslinked (typically, thermally crosslinked) by a conventional method suitable for, for example, the type of the crosslinking agent used, to form a pressure-sensitive adhesive (post-crosslinking pressure-sensitive adhesive). Such crosslinking agent is added such that the mass ratio of the ethyl acetate-insoluble matter of the post-crosslinking pressure-sensitive adhesive (hereinafter, may be occasionally referred to as "gel fraction of the pressure-sensitive adhesive") (Gb) is about 40% or greater, but 70% or less. When the gel fraction (Gb) is too low or too high as compared to the above-mentioned range, it tends to be difficult that the pressure-sensitive adhesive or pressure-sensitive adhesive sheet containing the pressure-sensitive adhesive exhibits high level of adhesive strength (pressure-sensitive adhesive force), high temperature holding power and edge peeling resistance in a well-balanced manner. For example, when the gel fraction (Gb) is too low, the high temperature holding power is likely to be insufficient; whereas when the gel fraction (Gb) is too high, the edge peeling resistance is likely to be insufficient. When the crosslinking agent is contained such that the gel fraction of the pressure-sensitive adhesive (Gb) is about 45% or greater, but 65% or less, a pressure-sensitive adhesive composition providing a pressure-sensitive adhesive or a pressure-sensitive adhesive sheet exhibiting a higher performance (for example, having a higher level of edge peeling resistance) can be realized.

In a pressure-sensitive adhesive composition containing a tackifier (especially, an ethyl acetate-soluble tackifier) (for example, in a pressure-sensitive adhesive composition containing the tackifier at a ratio of about 5 to 30 parts by mass with respect to 100 parts by mass of the acrylic polymer), the crosslinking agent is preferably contained such that the gel fraction (Gb) is about 40% or greater, but 65% or less, more preferably about 40% or greater, but 63% or less, and still more preferably about 45% or greater, but 55% or less. Owing to this, can be obtained a pressure-sensitive adhesive composition providing a pressure-sensitive adhesive or sheet exhibiting a higher performance (for example, having a higher level of edge peeling resistance).

The "gel fraction of pressure-sensitive adhesive (Gb)" is measured by the following method.

<Method for measuring gel fraction of pressure-sensitive adhesive (Gb)>

A pressure-sensitive adhesive composition is applied (typically coated) onto release liner. The resultant is dried at 100°C for 3 minutes to form an pressure-sensitive adhesive layer of about 50 to 100 $\mu$m thickness on the release liner and is further stored at 50°C for 3 days. Then, a sample of about 0.1 g pressure-sensitive adhesive (mass: $W_{b1}$ mg) is taken from the pressure-sensitive adhesive layer. The sample is placed on tetrafluoroethylene porous membrane of 0.2 $\mu$m (mass: $W_{b2}$ mg) average pore diameter, and the membrane with the measuring sample is tied with cotton yarn to form a bag (mass: $W_{b3}$ mg). This bag is placed into a screw tube of 50 mL volume (one screw tube is used for one bag), and the screw tube is filled with ethyl acetate. The screw tube in this state is left at room temperature (typically, at 23°C) for 7 days, and then the bag is removed from the screw tube and dried at 130°C for 2 hours. Then, the mass ($W_{b4}$ mg) of the bag is measured. The gel fraction of the pressure-sensitive adhesive (Gb) is obtained by substituting the above values into the following expression.

$$Gb[\%] = [(W_{b4} - W_{b2} - W_{b3})/W_{b1}] \times 100$$

It is desirable to use as the tetrafluoroethylene porous membrane, trade name "Nitoflon (registered trademark) NTF1122 or an equivalent thereof.

It is preferable that the type, ratio and the like of crosslinking agent contained in the aqueous emulsion of the acrylic polymer are set so as to obtain the pressure-sensitive adhesive having the gel fraction (Gb) in the preferable range disclosed herein. As a guideline to set such conditions effectively, the above-described preferable ratio (amount (parts by mass) of crosslinking agent with respect to 100 parts by mass of the acrylic polymer) may be referred.

The weight average molecular weight of the THF-soluble matter of the post-crosslinking pressure-sensitive adhesive (Mx) may be, but not limited to, for example, about $10 \times 10^4$ to $80 \times 10^4$ (preferably, about $20 \times 10^4$ to $60 \times 10^4$) in terms of standard polystyrene. The weight average molecular weight (Mx) can be measured by substantially the same method as the weight average molecular weight of the THF-soluble matter of the acrylic polymer (Mw). When the weight average molecular weight (Mx) is too low as compared to the above range, it is likely that the adhesive strength (pressure-sensitive adhesive force), high temperature holding power and edge peeling resistance of the pressure-sensitive adhesive or the pressure-sensitive adhesive sheet containing thereof become unbalanced. For example, the high temperature holding power is likely to be insufficient. By contrast, when the weight average molecular weight (Mx) is too high as compared to the above range, the pressure-sensitive adhesive agent is likely to have lower initial adhesive strength or tackiness. The weight average molecular weight of the THF-soluble matter of the post-crosslinking pressure-sensitive adhesive agent (Mx) can be adjusted by appropriately setting the type, ratio and the like of the crosslinking agent contained in the aqueous emulsion of the acrylic polymer. The weight average molecular weight (Mx) can also be adjusted by parameters such as whether or not to use chain transfer agent when producing the acrylic polymer, in the case where a chain transfer agent is used, the type (compound) and amount thereof, whether or not to use functional group-containing monomer, in the case where a functional group-containing monomer is used, the type (compound) and amount thereof, the mass ratio of the functional group-containing monomer with respect to the total amount of the monomer material, and the like.

In one preferable embodiment of the method for producing a pressure-sensitive adhesive composition disclosed herein, tackifier is further added into the aqueous emulsion of acrylic polymer. In one preferable embodiment of the pressure-sensitive adhesive composition disclosed herein, the composition contains tackifier in addition to the aqueous emulsion of acrylic polymer and crosslinking agent. As the tackifier, one, or two or more, selected from various tackifier resins such as rosin-based resins, rosin derivative resins, petroleum-based resins, terpene-based resins, phenol-based resins, ketone-based resins and the like may be used. Usable rosin-based resins include, for example, rosins such as gum rosin, wood rosin, tall-oil rosin and the like, stabilized rosins (for example, stabilized rosins obtained by treating the any of the above-mentioned rosins with disproportionation or hydrogenation), polymerized rosins (for example, multimer of any of the above-mentioned rosins, typically, dimer thereof), modified rosins (for example, unsaturated acid-modified rosins modified by unsaturated acids such as maleic acid, fumaric acid, (meth)acrylic acid or the like), and the like. Usable rosin derivative resins include, for example, esterified compounds of the above-mentioned rosins, phenol modified compounds of the above-mentioned rosins and esterified compounds thereof, and the like. Usable petroleum-based resins include, for example, aliphatic petroleum resins, aromatic petroleum resins, copolymeric petroleum resins, alicyclic petroleum resins, hydrides thereof, and the like. Usable terpene-based resins include, for example, $\alpha$-pinene resins, $\beta$-pinene resins, aromatic modified terpene-based resins, terpenephenol-based resins, and the like. Usable ketone-based resins include, for example, ketone-based resins obtained by condensation of ketones (for example, aliphatic ketones such as methylethylketone, methylisobutylketone, acetophenone and the like; alicyclic ketones such as cyclohexanone, methylcyclohexanone and the like) and formaldehyde.

In order to, for example, improve cohesive strength under high temperature conditions, a tackifier having a softening point of, for example, about 140°C or higher (typically, 140 to 180°C) is preferably employed. Examples of commercially available tackifier having such softening point include, but not limited to, trade names "Super Ester E-865", "Super Ester E-865NT", "Super Ester E-650", "Super Ester E-786-60", "Tamanol E-100", "Tamanol E-200", "Tamanol 803L", "Pensel D-160" and "Pensel KK" available from Arakawa Chemical Industries, Ltd.; trade names "YS polyster S", "YS Polyster T" and "Mightyace G" available from Yasuyhara Chemical Co., Ltd.; and the like. When a tackifier having a softening point of about 160°C or higher (typically, 160 to 180°C) is used, a pressure-sensitive adhesive composition providing higher performance pressure-sensitive adhesive layers can be provided. For example, a pressure-sensitive adhesive having cohesive strength under high temperature conditions and other characteristics (pressure-sensitive adhesive force, edge peeling resistance, etc.) at a higher level in a well-balanced manner can be provided. One, or a combination of two or more, of such tackifiers may be used.

Such tackifier is typically used by adding to an aqueous emulsion of the acrylic polymer. There is no specific limitation in the tackifier addition method. Usually, it is appropriate to add a tackifier as water dispersion (a tackifier emulsion) in which the tackifier is dispersed in water.

The ratio of tackifier, based on the nonvolatiles (solid content), may be, for example, about 50 parts by mass or less with respect to 100 parts by mass of the acrylic polymer. Usually, it is appropriate that the ratio is 30 parts by mass or less. There is no specific lower limit of the ratio of the tackifier, but it is usually 1 part by mass or more with respect to 100 parts by mass of the acrylic polymer in order to obtain a good result. In one preferable embodiment of the method for producing a pressure-sensitive adhesive composition or the pressure-sensitive adhesive composition disclosed herein, the ratio (blend ratio) of the tackifier is about 5 to 30 parts by mass (for example, about 15 to 25 parts by mass) with respect to 100 parts by mass of the acrylic polymer, based on the solid content. When a pressure-sensitive adhesive composition containing tackifier at such a ratio is used, the pressure-sensitive adhesive which are obtained after crosslinking is carried out so as to have gel fraction (Gb) in the above-mentioned preferable range, or the pressure-sensitive adhesive sheet containing thereof, exhibit the three characteristics of adhesive strength (pressure-sensitive adhesive force), cohesive strength under high temperature conditions and edge peeling resistance at a higher level in a well-balanced manner.

The pressure-sensitive adhesive composition disclosed herein may contain a polymer component other than the acrylic polymer as an optional component. Such polymer component preferably has the property of rubber or elastomer. Usable polymer components include, for example, ethylene-vinyl acetate copolymer, acrylic rubber, natural rubber (NR), isoprene rubber (IR), styrene butadiene rubber (SBR), chloroprene rubber (CR), butyl rubber (IIR), ethylene propylene rubber (EPM, EPDM), polyisobutylene, styrene-ethylene-butylene-styrene copolymer (SEBS), acrylonitrile-butadiene copolymer (NBR), styrene-butadiene-styrene block copolymer (SBS), styrene-isoprene-styrene block copolymer (SIS), polyvinyl alkyl ether (for example, polyvinyl isobutyl ether), and the like. One, or a combination of two or more, of these may be used.

Such polymer component may be used, for example, as an emulsion where the polymer component is dispersed in water, which in turn mixed in an aqueous emulsion of the acrylic polymer . It is appropriate that the amount (blend ratio) of the polymer component is about 50 parts by mass or less (for example, 5 to 50 parts by mass) with respect to 100 parts by mass of the acrylic polymer, based on the nonvolatiles (solid content). The ratio may be 5 parts by mass or less. The pressure-sensitive adhesive composition may contain substantially no such polymer component.

The pressure-sensitive adhesive composition disclosed herein may contain acid or base (ammonia water or the like) for the purpose of adjusting pH value or the like. Other optional components which may be contained in the composition are, for example, various additives generally used in the field of aqueous pressure-sensitive adhesive composition, including viscosity modifier, leveling agent, plasticizer, filler, colorant such as pigment, dye or the like, stabilizer, preservative, anti-aging agent and the like. As such additives, conventionally known additives may be used in a usual manner. These additives do not provide any specific feature to the present invention and thus will not be described in detail.

The pressure-sensitive adhesive sheet according to the present invention includes a pressure-sensitive adhesive layer formed using any of the pressure-sensitive adhesive compositions disclosed herein (may be a pressure-sensitive adhesive composition produced by any of the methods disclosed herein). The pressure-sensitive adhesive sheet according to the present invention may be a substrate-equipped pressure-sensitive adhesive sheet having a pressure-sensitive adhesive layer on one surface or both of two surfaces of a sheet substrate (support), or a substrate-less pressure-sensitive adhesive sheet including the pressure-sensitive adhesive layer provided on, for example, a release liner. The concept of the pressure-sensitive adhesive sheet herein encompasses pressure-sensitive adhesive tape, pressure-sensitive adhesive label, pressure-sensitive adhesive film and the like. The pressure-sensitive adhesive layer is not limited to a continuously formed layer and may be a pressure-sensitive adhesive layer formed to have a regular or random pattern such as, for example, dots or stripes.

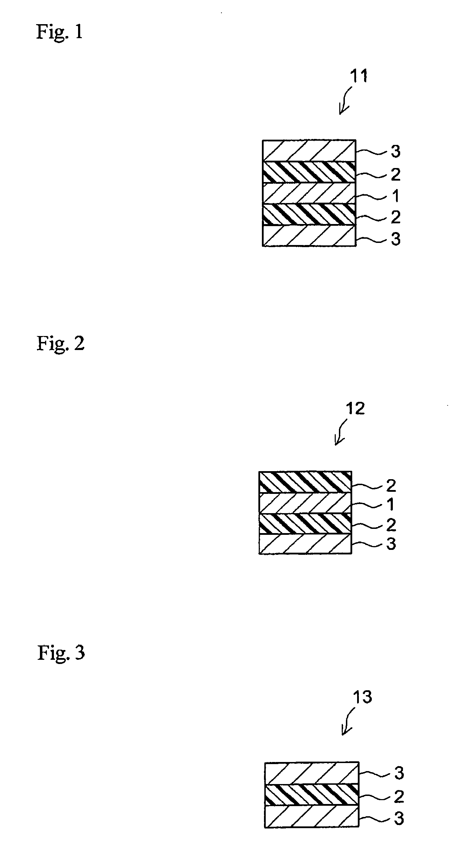

The pressure-sensitive adhesive sheet disclosed herein may have, for example, a cross-sectional structure schematically shown in Figs. 1 to 6. Figs. 1 and 2 each show an example of a structure of a substrate-equipped, double-faced pressure-sensitive adhesive sheet. In a pressure-sensitive adhesive sheet 11 shown in Fig. 1, a pressure-sensitive adhesive layer 2 is provided on each of two surfaces of a substrate 1, and the pressure-sensitive adhesive layers 2 are each protected by a release liner 3. At least a surface of each release liner 3 in contact with the pressure-sensitive adhesive layer 2 is a releasable surface. In a pressure-sensitive adhesive sheet 12 shown in Fig. 2, a pressure-sensitive adhesive layer 2 is provided on each of two surfaces of a substrate 1. One of the pressure-sensitive adhesive layers 2 is protected by a release liner 3. Both of two surfaces of the release liner 3 are releasable surfaces. This type of pressure-sensitive adhesive sheet 12 may be rolled to put the pressure-sensitive adhesive layer 2 which is initially not protected by the releasable layer 3, into contact with the open surface of the release liner 3. As a result, the pressure-sensitive adhesive layer 2, which is initially not protected, can also be protected by the release liner 3.

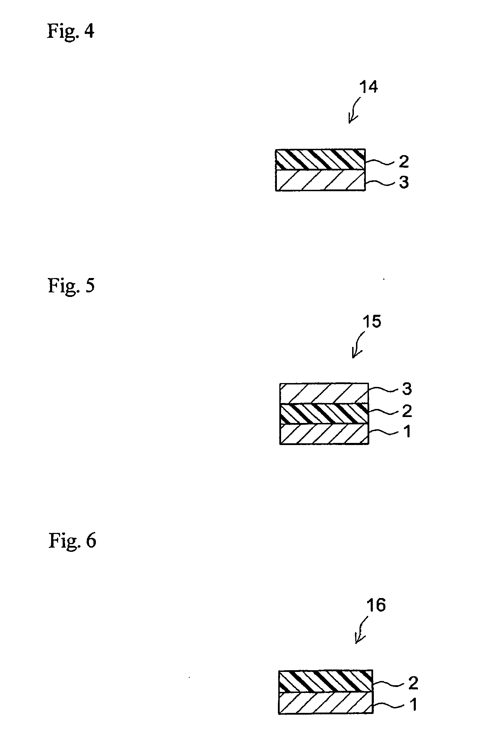

Figs. 3 and 4 each show an example of a structure of a substrate-less pressure-sensitive adhesive sheet. In a pressure-sensitive adhesive sheet 13 shown in Fig. 3, both of two surfaces of a substrate-less pressure-sensitive adhesive layer 2 are each protected by a release liner 3. At least a surface of each release liner 3 in contact with the pressure-sensitive adhesive layer 2 is a releasable surface. In a pressure-sensitive adhesive sheet 14 shown in Fig. 4, one surface of a substrate-less pressure-sensitive adhesive layer 2 is protected by a release liner 3. Both of two surfaces of the release liner 3 are releasable surfaces. This type of pressure-sensitive adhesive sheet 14 may be rolled to put the open surface of the pressure-sensitive adhesive layer 2 into contact with the open surface of the release liner 3. As a result, the surface of the pressure-sensitive adhesive layer 2, which is initially not protected, can also be protected by the release liner 3.

Figs. 5 and 6 each show an example of a structure of a substrate-equipped single-sided pressure-sensitive adhesive sheet. In a pressure-sensitive adhesive sheet 15 shown in Fig. 5, a pressure-sensitive adhesive layer 2 is provided on one surface of a substrate 1, and a surface (adhesive surface) of the pressure-sensitive adhesive layer 2 is protected by a release liner 3. At least a surface of the release liner 3 in contact with the pressure-sensitive adhesive layer 2 is a releasable surface. In a pressure-sensitive adhesive sheet 16 shown in Fig. 6, a pressure-sensitive adhesive layer 2 is provided on one surface of a substrate 1. The other surface of the substrate 1 is a releasable surface. This type of pressure-sensitive adhesive sheet 16 may be rolled to put a surface of the pressure-sensitive adhesive layer, which is initially not protected, into contact with the releasable surface of the substrate 1. As a result, the surface (adhesive surface) of the pressure-sensitive adhesive layer 2, which is initially not protected, can also be protected by the releasable surface of the substrate 1.

As the substrate constituting such pressure-sensitive adhesive sheet, for example, any one of the following may be appropriately selected in accordance with the use of the pressure-sensitive adhesive sheet: plastic film such as polypropylene film, ethylene-propylene copolymer film, polyester film, polyvinyl chloride film, and the like; foam substrate such as polyurethane foam, polyethylene foam and the like; paper such as kraft paper, crepe paper, Japanese paper ("washi"), and the like; cloth such as cotton cloth, staple-fiber cloth and the like; unwoven cloth such as polyester unwoven cloth, vinylon unwoven cloth; and metal foil such as aluminum foil, copper foil and the like. As the plastic film, either unstretched film or stretched (uniaxially or biaxially stretched) film may be used. A surface of a substrate on which the pressure-sensitive adhesive layer is to be provided may be surface-treated by application of a primer coating, corona discharge or the like. The thickness of the substrate may be appropriately selected in accordance with the purpose, and is generally about 10 μm to 500 μm (typically, 10 μm to 200 μm).

The pressure-sensitive adhesive layer may be formed by, for example, providing (typically by coating) any of the aqueous pressure-sensitive adhesive compositions disclosed herein onto a substrate or a release liner, and then drying the composition. The pressure-sensitive adhesive composition may be applied using, for example, a conventionally used coater such as a gravure roll coater, a reverse roll coater, a kiss roll coater, a dip roll coater, a bar coater, a knife coater, a spray coater or the like. The application thickness of the pressure-sensitive adhesive composition is not specifically limited to any value, and may be, for example, set such that the thickness of the pressure-sensitive adhesive layer formed upon drying is about 2 μm to 150 μm (typically, about 5 μm to 100 μm). In order to, for example, promote the crosslinking reaction and improve the productivity, it is preferable that the pressure-sensitive adhesive composition is dried under heating. Although depending on the type of the substrate, the drying temperature may be, for example, about 40 to 120°C. In the case of a substrate-equipped pressure-sensitive adhesive sheet, the pressure-sensitive adhesive composition may be directly applied to the substrate to form a pressure-sensitive adhesive layer, or a pressure-sensitive adhesive layer formed on the release liner may be transferred to the substrate.

The pressure-sensitive adhesive sheet provided by the present invention may realize a plurality of characteristics at a high level at the same time. For example, the pressure-sensitive adhesive sheet may realize three characteristics of pressure-sensitive adhesive force, cohesive strength (especially, cohesive strength under high temperature conditions) and edge peeling resistance (anti-repellency) at a higher level in a well-balanced manner. The cohesive strength under high temperature conditions can be found by, for example, measuring the holding power at 80°C (high temperature holding power) as described later. Edge peeling resistance may be an index which indicates the adhesiveness of the pressure-sensitive adhesive sheet on a curved surface or the like (capability of adhering in compliance with the shape of the surface to which the sheet is to be attached). The edge peeling resistance may be evaluated by, for example, an edge peeling test described later.

The reasons why such superb effects are provided are not completely clear, but can be presumed as follows. According to the method for producing a pressure-sensitive adhesive composition disclosed herein, an aqueous emulsion of an acrylic polymer having gel fraction (Ga) of 3% or greater, but 15% or less and weight average molecular weight (Mw) of $70 \times 10^4$ or greater, but $100 \times 10^4$ or less is used. Ga of an acrylic polymer having such a gel fraction (Ga) and such a weight average molecular weight (Mw) is considered to be mainly a result of the gel (the insoluble matter) which is formed because, as the molecular weight of the polymer increases, the degree of entanglement (interaction) of polymer chains inside the emulsion particles is increased and thus the solubility is lowered. Accordingly, the acrylic polymer having Ga and Mw in the above-described ranges is considered to be in a sufficiently gelled state because of the interaction of high molecular weight polymers inside the particles (in a state sufficiently crosslinked to provide the above-mentioned gel fraction (Ga)). Acrylic polymer in such a state may be well balanced in terms of, for example, pressure-sensitive adhesive force and edge peeling resistance, but is likely to be insufficient in cohesive strength (especially, cohesive strength at high temperature). This is considered to be related to that the inter-particle crosslinking is insufficient and that the above-mentioned gel fraction is mainly realized by entanglement of polymer chains. According to the method disclosed herein, crosslinking agent is added into the aqueous emulsion of the acrylic polymer such that an pressure-sensitive adhesive having a gel fraction (Gb) of 40% or greater, but 70% or less is formed. It is considered that owing to this, the cohesive strength is appropriately supplied and as a result, the three characteristics of pressure-sensitive adhesive force, cohesive strength and edge peeling resistance can be provided at a high level in a well-balanced manner.

## EXAMPLES

Hereinafter, some examples according to the present invention will be described, but the present invention is not limited to these examples. In the following description, the terms "part(s)" and "%" are based on mass unless otherwise specified.

The weight average molecular weight of the THF-soluble matter of the acrylic polymer (Mw) was determined in terms of standard polystyrene with a sample solution prepared for molecular weight measurement by the method described above, using HLC-8120GPC (model name; produced by Tosoh Corporation) as gel permeation chromatography (GPC) under the following conditions.

[GPC measuring conditions]

Amount of sample solution injected: 10 μL (THF solution at a concentration of 0.2% by mass)

Eluant: THF
Flow rate: 0.6 mL/min.
Measuring temperature: 40°C
Column: TSKgel GMH-H(S)
Detector: Differential refractive index detector

<Example 1>

In this example, a monomer material containing butyl acrylate (BA)/2-ethylhexyl acrylate (2EHA)/acrylic acid (AA) at a mass ratio of 29/67/4 was used, and the total amount of the monomer material ($M_{all}$) was distributed among a first and second polymerization materials at a mass ratio of 50:50. The first polymerization material and the second polymerization material were supplied to the reaction vessel in this order; and emulsion polymerization (two-stage polymerization) was carried out to produce an aqueous emulsion of acrylic polymer. A carbodiimide-based crosslinking agent was added into the aqueous emulsion to produce a pressure-sensitive adhesive composition. The composition of the monomer material contained in the first polymerization material and the composition of the monomer material contained in the second polymerization material were both BA/2EHA/AA = 29/67/4 (namely, the same as the composition of the entire monomer material used for synthesizing the acrylic polymer). The concentration of chain transfer agent in the first polymerization material ($C_1$) was 0.03%, and the concentration of chain transfer agent in the second polymerization material ($C_2$) was 0.04%. With respect to the total amount of the chain transfer agent used ($T_{all}$), the mass proportion of the chain transfer agent contained in the first polymerization material ($T_1$) was 43% (namely, $T_1/T_{all}$=43%). The mass of the chain transfer agent contained in the first polymerization material ($T_1$) corresponded to 0.015% of the total amount of the monomer material used here ($M_{all}$) (namely, $T_1/M_{all}$ = 0.015%).
Hereinafter, detailed production procedures will be described.

(1) Preparation of Aqueous Emulsion

Into a reaction vessel equipped with a condenser, nitrogen inlet, thermometer and stirrer, were placed 0.279 g of 2,2'-azobis[N-(2-carboxyethyl)-2-methylpropionamidinel hydrate (polymerization initiator) (trade name "VA-057" available from Wako Pure Chemical Industries, Ltd. was used) and 100 g of ion-exchanged water , and the resulting mixture was stirred for 1 hour under nitrogen. To this while kept at 60°C, 200 g of the first polymerization material, obtained by emulsifying 29 part BA, 67 part 2EHA, 4 part AA, 0.03 part dodecanethiol (chain transfer agent), and 2 part sodium polyoxyethylene lauryl sulfate (emulsifier) with 41 part ion-exchanged water, was gradually added dropwise over 2 hours to promote the emulsion polymerization reaction.
Following the completion of addition of the first polymerization material, was gradually added dropwise 200 g of the second polymerization material, obtained by emulsifying 29 part BA, 67 part 2EHA, 4 part AA, 0.04 part dodecanethiol, and 2 part sodium polyoxyethylene lauryl sulfate in 41 part ion-exchanged water, to promote the emulsion polymerization reaction at the same temperature.
After the completion of addition of the second polymerization material, the resultant substance was kept at the same temperature for 3 hours for aging. 10% ammonium water was added thereto to adjust the pH of the emulsion to 7.5. Thus, an aqueous emulsion of acrylic polymer according to example 1 was obtained.
With regard to the acrylic polymer comprising the emulsion, the weight average molecular weight of the THF-soluble matter (Mw) and the mass ratio of the ethyl acetate-insoluble matter (gel fraction) (Ga) were measured by the above-described methods. The weight average molecular weight (Mw) was $92.6 \times 10^4$ and the gel fraction (Ga) was 9%.

(2) Preparation of Pressure-sensitive Adhesive Composition

To the aqueous emulsion, an emulsion of a tackifier (water dispersion of polymerized rosin having a softening point of 160°C; trade name "Super Ester E-865NT" available from Arakawa Chemical Industries, Ltd. was used) was added at a ratio of 20 parts (based on the solid content) with respect to 100 parts of the acrylic polymer contained in the aqueous emulsion. As the carbodiimide-based crosslinking agent, trade name "Carbodilite V-04" available from Nissinbo Industries, Inc. (a water solution type carbodiimide-based crosslinking agent) was added at a ratio of 0.4 parts (based on the solid content) with respect to 100 parts of the acrylic polymer. Thus, an aqueous pressure-sensitive adhesive composition according to example 1 was obtained.

(3) Production of Pressure-sensitive Adhesive Sheet

The above-obtained pressure-sensitive adhesive composition was applied to a release liner obtained by treating high-grade paper with a silicone-based release agent. Then, the composition was dried at 100°C for 3 minutes to form a pressure-sensitive adhesive layer of about 70 $\mu$m thickness on the release liner. Thus, a substrate-less pressure-sensitive adhesive sheet was obtained. Separately, the pressure-sensitive adhesive composition was applied to a polyethylene terephthalate (PET) film of 38 $\mu$m thickness. The composition was dried at 100°C for 3 minutes to produce a pressure-sensitive adhesive sheet having a pressure-sensitive adhesive layer of 70 $\mu$m thickness on PET substrate (a PET substrate pressure-sensitive adhesive sheet).

The substrate-less pressure-sensitive adhesive sheet was stored at 50°C for 3 days after the production thereof, and then a pressure-sensitive adhesive sample was taken from the pressure-sensitive adhesive sheet. The mass ratio of the ethyl acetate-insoluble matter (gel fraction) (Gb) with respect to the post-crosslinking pressure-sensitive adhesive was measured by the above-described method. The gel fraction of the pressure-sensitive adhesive (Gb) was 46%.

<Example 2>

In this example, emulsion polymerization (two-stage polymerization) was carried out with the total amount of the monomer material ($M_{all}$) being distributed among a first polymerization material and a second polymerization material at a mass ratio of 37.5:62.5. The concentration of chain transfer agent in the first polymerization material ($C_1$) was 0.03%, and the concentration of chain transfer agent in the second polymerization material ($C_2$) was 0.04%. With respect to the total amount of the chain transfer agent used, the mass proportion of the chain transfer agent contained in the first polymerization material ($T_1$) was 31%. The mass of the chain transfer agent contained in the first polymerization material ($T_1$) corresponded to 0.011% of the total amount of the monomer material used here ($M_{all}$). As the crosslinking agent, a carbodiimide-based was used.

150 g of the first polymerization material, obtained by emulsifying 29 part BA, 67 part 2EHA, 4 part AA, 0.03 part dodecanethiol, and 2 part sodium polyoxyethylene lauryl sulfate with 41 part ion exchanged water, was gradually added dropwise over 1.5 hours. Followingly, 250 g of the second polymerization material, obtained by emulsifying 29 part BA, 67 part 2EHA, 4 part AA, 0.04 part dodecanethiol, and 2 part sodium polyoxyethylene lauryl sulfate with 41 part ion exchanged water, was gradually added dropwise over 2.5 hours. The other conditions were the same as those in example 1. Thus, an aqueous emulsion of acrylic polymer according to example 2 was obtained. The weight average molecular weight (Mw) and the gel fraction (Ga) of the acrylic polymer contained in the aqueous emulsion were measured in the same manner as in example 1. Mw was 79x $10^4$ and Ga was 6%.

To the aqueous emulsion, was added an emulsion of the same tackifier as used in example 1 at the same ratio as that in example 1. As the carbodiimide-based crosslinking agent, trade name "Carbodilite E-04" available from Nissinbo Industries, Inc. (an emulsion type carbodiimide-based crosslinking agent) was added at a ratio of 0.4 parts (based on the solid content) with respect to 100 parts of the acrylic polymer. Thus, an aqueous pressure-sensitive adhesive composition according to example 2 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 55%.

<Example 3>

In this example, emulsion polymerization (two-stage polymerization) was carried out with the total amount of the monomer material ($M_{all}$) being distributed among a first polymerization material and a second polymerization material at a mass ratio of 37.5:62.5. The concentration of chain transfer agent in the first polymerization material ($C_1$) was 0.02%, and the concentration of chain transfer agent in the second polymerization material ($C_2$) was 0.05%. With respect to the total amount of the chain transfer agent used, the mass proportion of the chain transfer agent contained in the first polymerization material ($T_1$) was 19%. The mass of the chain transfer agent contained in the first polymerization material ($T_1$) corresponded to 0.0075% of the total amount of the monomer material used here ($M_{all}$). As the crosslinking agent, a carbodiimide-based crosslinking agent was used.

150 g of the first polymerization material, obtained by emulsifying 29 part BA, 67 part 2EHA, 4 part AA, 0.02 part dodecanethiol, and 2 part sodium polyoxyethylene lauryl sulfate with 41 part ion exchanged water, was gradually added dropwise over 1.5 hours. Followingly, 250 g of the second polymerization material, obtained by emulsifying 29 part BA, 67 part 2EHA, 4 part AA, 0.05 part dodecanethiol, and 2 part sodium polyoxyethylene lauryl sulfate with 41 part ion exchanged water, was gradually added dropwise over 2.5 hours. The other conditions were the same as those in example 1. Thus, an aqueous emulsion of acrylic polymer according to example 3 was obtained. The weight average molecular weight (Mw) and the gel fraction (Ga) of the acrylic polymer contained in the aqueous emulsion were measured in the same manner as in example 1. Mw was 82.2$\times 10^4$ and Ga was 14%.

To the aqueous emulsion, were added an emulsion of the same tackifier and the same carbodiimide-based crosslinking agent as used in example 1 at the same ratios as those in example 1. Thus, an aqueous pressure-sensitive adhesive composition according to example 3 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 48%.

<Example 4>

In this example, emulsion polymerization (two-stage polymerization) was carried out with the total amount of the monomer material ($M_{all}$) being distributed among a first polymerization material and a second polymerization material at a mass ratio of 37.5:62.5. The concentration of chain transfer agent in the first polymerization material ($C_1$) was 0.02%, and the concentration of chain transfer agent in the second polymerization material ($C_2$) was 0.04%. With respect to the total amount of the chain transfer agent to be used, the mass proportion of the chain transfer agent contained in the first polymerization material ($T_1$) was 23%. The mass of the chain transfer agent contained in the first polymerization material ($T_1$) corresponded to 0.0075% of the total amount of the monomer material used here ($M_{all}$). As the crosslinking agent, a carbodiimide-based crosslinking agent was used.

150 g of the first polymerization material, obtained by emulsifying 29 part BA, 67 part 2EHA, 4 part AA, 0.02 part dodecanethiol, and 2 part sodium polyoxyethylene lauryl sulfate with 41 part ion exchanged water, was gradually added dropwise over 1.5 hours. Followingly, 250 g of the second polymerization material, obtained by emulsifying 29 part BA, 67 part 2EHA, 4 parts of AA, 0.04 parts of dodecanethiol, and 2 part sodium polyoxyethylene lauryl sulfate with 41 part ion exchanged water, was gradually added dropwise over 2.5 hours. The other conditions were the same as those in example 1. Thus, an aqueous emulsion of acrylic polymer according to example 4 was obtained. The weight average molecular weight (Mw) and the gel fraction (Ga) of the acrylic polymer contained in the aqueous emulsion were measured in the same manner as in example 1. Mw was $97.2 \times 10^4$ and Ga was 14%.

To the aqueous emulsion, was added an emulsion of the same tackifier as used in example 1 at the same ratio as that in example 1. The same carbodiimide-based crosslinking agent as used in example 1 (Carbodilite V-04) was added at a ratio of 0.44 parts (based on the solid content) with respect to 100 parts of the acrylic polymer. Thus, an aqueous pressure-sensitive adhesive composition according to example 4 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 52%.

<Example 5>

In this example, emulsion polymerization (two-stage polymerization) was carried out with the total amount of the monomer material ($M_{all}$) being distributed among a first polymerization material and a second polymerization material at a mass ratio of 50:50. The concentration of chain transfer agent in the first polymerization material ($C_1$) was 0.03%, and the concentration of chain transfer agent in the second polymerization material ($C_2$) was 0.045%. With respect to the total amount of the chain transfer agent used, the mass proportion of the chain transfer agent contained in the first polymerization material ($T_1$) was 40%. The mass of the chain transfer agent contained in the first polymerization material ($T_1$) corresponded to 0.015% of the total amount of the monomer material used here ($M_{all}$). As the crosslinking agent, a carbodiimide-based crosslinking agent was used.

200 g of the first polymerization material, obtained by emulsifying 29 part BA, 67 part 2EHA, 4 part AA, 0.03 part dodecanethiol, and 2 part sodium polyoxyethylene lauryl sulfate with 41 part ion exchanged water, was gradually added dropwise over 2 hours. Followingly, 200 g of the second polymerization material, obtained by emulsifying 29 part BA, 67 part 2EHA, 4 part AA, 0.045 part dodecanethiol, and 2 part sodium polyoxyethylene lauryl sulfate with 41 part ion exchanged water, was gradually added dropwise over 2 hours. The other conditions were the same as those in example 1. Thus, an aqueous emulsion of acrylic polymer according to example 5 was obtained. The weight average molecular weight (Mw) and the gel fraction (Ga) of the acrylic polymer contained in the aqueous emulsion were measured in the same manner as in example 1. Mw was $93.5 \times 10^4$ and Ga was 8%.

To the aqueous emulsion, were added an emulsion of the same tackifier and the same carbodiimide-based crosslinking agent as used in example 1 at the same ratios as those in example 1. Thus, an aqueous pressure-sensitive adhesive composition according to example 5 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 49%.

<Example 6>

In this example, emulsion polymerization (two-stage polymerization) was carried out with the total amount of the monomer material ($M_{all}$) being distributed among a first polymerization material and a second polymerization material at a mass ratio of 25:75. The concentration of chain transfer agent in the first polymerization material ($C_1$) was 0.02%, and the concentration of chain transfer agent in the second polymerization material ($C_2$) was 0.045%. With respect to the total amount of the chain transfer agent used, the mass proportion of the chain transfer agent contained in the first polymerization material ($T_1$) was 13%. The mass of the chain transfer agent contained in the first polymerization material ($T_1$) corresponded to 0.005% of the total amount of the monomer material used here ($M_{all}$). As the crosslinking agent, a carbodiimide-based crosslinking agent was used.

100 g of the first polymerization material, obtained by emulsifying 29 part BA, 67 part 2EHA, 4 part AA, 0.02 part dodecanethiol, and 2 part sodium polyoxyethylenelaurylsulfate with 41 part ion exchanged water, was gradually added dropwise over 1 hour. Followingly, 300 g of the second polymerization material, obtained by emulsifying 29 part BA, 67 part 2EHA, 4 part AA, 0.045 part dodecanethiol, and 2 part sodium polyoxyethylenelaurylsulfate with 41 part ion exchanged water, was gradually added dropwise over 3 hours. The other conditions were the same as those in example 1. Thus, an aqueous emulsion of acrylic polymer according to example 6 was obtained. The weight average molecular weight (Mw) and the gel fraction (Ga) of the acrylic polymer contained in the aqueous emulsion were measured in the same manner as in example 1. Mw was $83.5 \times 10^4$ and Ga was 4%.

To the aqueous emulsion, were added an emulsion of the same tackifier and the same carbodiimide-based crosslinking agent as used in example 1 at the same ratios as those in example 1. Thus, an aqueous pressure-sensitive adhesive composition according to example 6 was obtained.

Using the resultant pressure-sensitive adhesive composition, a substrate-less pressure-sensitive adhesive sheet and a pressure-sensitive adhesive sheet having a pressure-sensitive adhesive layer on a PET substrate were produced by the same methods as in example 1. The gel fraction of the pressure-sensitive adhesive (Gb), which was measured in the same manner as in example 1, was 45%.

<Example 7>

In this example, a monomer material containing BA/2EHA/AA/diacetoneacrylamide (DAAM) at a mass ratio of 29/67/4/0.5 was used, and emulsion polymerization (two-stage polymerization) was performed with the total amount of the monomer material ($M_{all}$) being distributed among a first polymerization material and a second polymerization material at a mass ratio of 37.5:62.5. The composition of the monomer material contained in each polymerization material was the same as the composition of the entire monomer material. The concentration of chain transfer agent in the first polymerization material ($C_1$) was about 0.03%, and the concentration of chain transfer agent in the second polymerization material ($C_2$) was about 0.04%. With respect to the total amount of the chain transfer agent used, the mass proportion of the chain transfer agent contained in the first polymerization material ($T_1$) was 31%. The mass of the chain transfer agent contained in the first polymerization material ($T_1$) corresponded to 0.011 % of the total amount of the monomer material used here ($M_{all}$). As the crosslinking agent, a hydrazine-based crosslinking agent was used.

150 g of the first polymerization material, obtained by emulsifying 29 part BA, 67 part 2EHA, 4 part AA, 0.5 part DAAM, 0.03 part dodecanethiol, and 2 part sodium polyoxyethylene lauryl sulfate with 41 part ion exchanged water, was gradually added dropwise over 1.5 hours. Continuously, 250 g of the second polymerization material, obtained by emulsifying 29 part BA, 67 part 2EHA, 4 part AA, 0.5 part DAAM, 0.04 part dodecanethiol, and 2 parts of sodium polyoxyethylene lauryl sulfate with 41 part ion exchanged water, was gradually added dropwise over 2.5 hours. The other conditions were the same as those in example 1. Thus, an aqueous emulsion of acrylic polymer according to example 7 was obtained. The weight average molecular weight (Mw) and the gel fraction (Ga) of the acrylic polymer contained in the aqueous emulsion were measured in the same manner as in example 1. Mw was $89.9 \times 10^4$ and Ga was 3%.

To the aqueous emulsion, was added an emulsion of the same tackifier as used in example 1 at the same ratio as that in example 1. Adipic acid dihydrazide as the hydrazine-based crosslinking agent was added at a ratio of 0.2 parts with respect to 100 parts of the acrylic polymer. Thus, an aqueous pressure-sensitive adhesive composition according to example 7 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 60%.

<Comparative example 1 >

In this comparative example, emulsion polymerization (two-stage polymerization) was carried out with the total amount of the monomer material ($M_{all}$) being distributed among a first polymerization material and a second polymerization material at a mass ratio of 25:75. The first polymerization material did not contain chain transfer agent, and the concentration of the chain transfer agent in the second polymerization material ($C_2$) was 0.04%. As the crosslinking agent, a carbodiimide-based crosslinking agent was used.

100 g of the first polymerization material, obtained by emulsifying 29 part BA, 67 part 2EHA, 4 part AA, and 2 part sodium polyoxyethylene lauryl sulfate with 41 part ion exchanged water, was gradually added dropwise over 1 hour. Followingly, 300 g of the second polymerization material, obtained by emulsifying 29 part BA, 67 part 2EHA, 4 parts of AA, 0.04 parts of dodecanethiol, and 2 part sodium polyoxyethylene lauryl sulfate with 41 part ion exchanged water, was gradually added dropwise over 3 hours. The other conditions were the same as those in example 1. Thus, an aqueous emulsion of acrylic polymer according to comparative example 1 was obtained. The weight average molecular weight (Mw) and the gel fraction (Ga) of the acrylic polymer contained in the aqueous emulsion were measured in the same manner as in example 1. Mw was $67.8 \times 10^4$ and Ga was 23%.

To the aqueous emulsion, were added an emulsion of the same tackifier and the same carbodiimide-based crosslinking agent as used in example 1 at the same ratios as those in example 1. Thus, an aqueous pressure-sensitive adhesive composition according to comparative example 1 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 52%.

<Comparative example 2>

In this comparative example, emulsion polymerization was carried out using a monomer material containing BA/2EHA/AA at a mass ratio of 29/67/4 and a chain transfer agent at 0.04 parts by mass with respect to 100 parts by mass of the monomer material. As the crosslinking agent, a carbodiimide-based crosslinking agent was used.

Into a reaction vessel equipped with a condenser, nitrogen inlet, thermometer and stirrer, were placed 0.279 g of 2,2'-azobis[N-(2-carboxyethyl)-2-methylpropionamidine] hydrate (polymerization initiator) (trade name "VA-057" available from Wako Pure Chemical Industries, Ltd. was used) and 100 g of ion exchanged water, and the resulting mixture was stirred for 1 hour under nitrogen. To this kept at 60°C, 400 g of a polymerization material, obtained by emulsifying 29 part BA, 67 part 2EHA, 4 part AA, 0.04 part dodecanethiol (chain transfer agent), and 2 part sodium polyoxyethylene lauryl sulfate (emulsifier) with 41 part ion exchanged water, was gradually added dropwise over 4 hours to promote the emulsion polymerization reaction. Following the completion of addition of the polymerization material, the resulting mixture was kept at the same temperature for 3 hours for aging. 10% ammonium water was added thereto to adjust the pH of the emulsion to 7.5. Thus, an aqueous emulsion of acrylic polymer according to comparative example 2 was obtained. The weight average molecular weight (Mw) and the gel fraction (Ga) of the acrylic polymer contained in the aqueous emulsion were measured in the same manner as in example 1. Mw was $74.7 \times 10^4$ and Ga was 1%.

To the aqueous emulsion, were added an emulsion of the same tackifier and the same carbodiimide-based crosslinking agent as used in example 1 at the same ratios as those in example 1. Thus, an aqueous pressure-sensitive adhesive composition according to comparative example 2 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 46%.

<Comparative example 3>

In this comparative example, emulsion polymerization was carried out using a monomer material containing BA/2EHA/AA at a mass ratio of 29/67/4 and a chain transfer agent at 0.036 parts by mass with respect to 100 parts by mass of the monomer material. As the crosslinking agent, an oxazoline-based crosslinking agent was used.

An emulsion of acrylic polymer according to comparative example 3 was obtained in the same manner as in comparative example 2 except that 400 g of a polymerization material, obtained by emulsifying 29 part BA, 67 part 2EHA, 4 part AA, 0.36 part dodecanethiol (chain transfer agent), and 2 part sodium polyoxyethylene lauryl sulfate (emulsifier) with 41 part ion exchanged water, was used. The weight average molecular weight (Mw) and the gel fraction (Ga) of the acrylic polymer contained in the aqueous emulsion were measured in the same manner as in example 1. Mw was $94.4 \times 10^4$ and Ga was 7%.

To the aqueous emulsion, an emulsion of the same tackifier as used in example 1 was added at the same ratio as that in example 1. As the oxazoline-based crosslinking agent, was added trade name "Epocros K2020E" available from Nippon Shokubai Co., Ltd. at a ratio of 0.5 parts (based on the solid content) with respect to 100 parts of the acrylic polymer. Thus, an aqueous pressure-sensitive adhesive composition according to comparative example 3 was obtained.

Using the resultant pressure-sensitive adhesive composition, a substrate-less pressure-sensitive adhesive sheet and a pressure-sensitive adhesive sheet having a pressure-sensitive adhesive layer on PET substrate were produced by the same methods as in example 1. The gel fraction of the pressure-sensitive adhesive (Gb), which was measured in the same manner as in example 1, was 39%.

The substrate-less pressure-sensitive adhesive sheet (i.e. pressure-sensitive adhesive layer on release liner) and the PET substrate pressure-sensitive adhesive sheet, which were produced in each of the above examples and comparative examples, were stored at 50°C for 3 days after the production thereof, and then subjected to the following evaluation tests.

[Measurement of Pressure-sensitive Adhesive Force]

The PET substrate pressure-sensitive adhesive sheet was cut into a piece of 20 mm in width and 100 mm in length to prepare a test piece. The test piece was press-bonded on a SUS304 stainless steel plate as the adherend by reciprocating a 2 kg roller over the test piece once. The resultant was left at 23 °C for 30 minutes, and then the adhesive strength (N/20 mm width) was measured, in accordance with JIS Z0237, with a tensile machine set at a pulling speed of 300 mm/min. and a peeling angle of 180 degrees in a measuring environment at 23°C and with 50% relative humidity.

[Measurement of High-temperature (80°C) Holding Power]

The PET substrate pressure-sensitive adhesive sheet was cut into a piece of 10 mm in width and 100 mm in length to prepare a test piece. The test piece was press-bonded on a bakelite plate as the adherend with a bonding area of 10 mm width and 20 mm length, by reciprocating a 2 kg roller on the test piece once. The bakelite plate was left hanging at 80°C for 1 hour, and then a 500 g load was applied to the free end of the test piece. After leaving the bakelite plate with the applied load at 80°C for 1 hour, the degree of displacement (distance) of the test piece was measured in accordance with JIS Z0237.

[Edge Peeling Test]

Each pressure-sensitive adhesive sheet including a pressure-sensitive adhesive layer on release liner (i.e., substrate-less pressure-sensitive adhesive sheet) was applied on an aluminum sheet of 0.5 mm thickness, 10 mm width and 90 mm length to prepare a test piece. The length of the test piece was curved into an arch around a round rod of φ50 mm in diameter, and then the release liner was removed from the test piece to expose the pressure-sensitive adhesive layer. The pressure-sensitive adhesive sheet was press-bonded onto a polypropylene plate using a laminator. This was left at 23°C for 24 hours, and then heated at 70°C for 2 hours. After this, the height (mm) of the end portion of the test piece lifted from the surface of the polypropylene plate was measured.

Summary of the methods for producing the acrylic polymers described in the examples and comparative examples are shown in Table 1. In Table 1, "$T_{all}/M_{all}$" represents the ratio of the total amount of chain transfer agent ($T_{all}$) with respect to the total amount of the monomer material used for producing the acrylic polymer ($M_{all}$). Table 2 shows the weight average molecular weight of the THF-soluble matter of the acrylic polymer (Mw), the mass ratio of the ethyl acetate-insoluble matter of the acrylic polymer (Ga), the mass ratio of the ethyl acetate-insoluble matter of the post-crosslinking pressure-sensitive adhesive (Gb), and the results of the above evaluation tests. When measuring high temperature holding power, in the case where the test piece fell off within 1 hour after the load was applied, the duration of time until the test piece fell off is shown instead of the degree of displacement.

Table 1

|  | Monomer Dividing Ratio | $C_1$ [%] | $C_2$ [%] | $T_1/T_{all}$ [%] | $T_1/M_{all}$ [%] | $T_{all}/M_{all}$ [%] |
|---|---|---|---|---|---|---|
| Ex. 1 | 50:50 | 0.03 | 0.04 | 43 | 0.015 | 0.035 |
| Ex. 2 | 37.5:62.5 | 0.03 | 0.04 | 31 | 0.011 | 0.036 |
| Ex. 3 | 37.5:62.5 | 0.02 | 0.05 | 19 | 0.0075 | 0.039 |

(continued)

|  | Monomer Dividing Ratio | $C_1$ [%] | $C_2$ [%] | $T_1/T_{all}$ [%] | $T_1/M_{all}$ [%] | $T_{all}/M_{all}$ [%] |
|---|---|---|---|---|---|---|
| Ex. 4 | 37.5:62.5 | 0.02 | 0.04 | 23 | 0.0075 | 0.033 |
| Ex. 5 | 50:50 | 0.03 | 0.045 | 40 | 0.015 | 0.038 |
| Ex. 6 | 25:75 | 0.02 | 0.045 | 13 | 0.005 | 0.039 |
| Ex. 7 | 37.5:62.5 | 0.03 | 0.04 | 31 | 0.011 | 0.036 |
| CE 1 | 25:75 | 0 | 0.04 | 0 | 0 | 0.030 |
| CE 2 | - | (0.04) | | - | - | 0.040 |
| CE 3 | - | (0.036) | | - | - | 0.036 |
| Ex. = Example, CE = Comparative Example | | | | | | |

Table 2

|  | Mw | Ga [%] | Gb [%] | Adhesive Strength [N/20mm] | Holding Power [mm/hr] | Edge Peeling [mm] |
|---|---|---|---|---|---|---|
| Ex. 1 | $92.6 \times 10^4$ | 9 | 46 | 14.3 | 0.9 | 0.7 |
| Ex. 2 | $79.0 \times 10^4$ | 6 | 55 | 13.0 | 0.5 | 1.1 |
| Ex. 3 | $82.2 \times 10^4$ | 14 | 48 | 14.9 | 0.7 | 3.0 |
| Ex. 4 | $97.2 \times 10^4$ | 14 | 52 | 13.9 | 0.6 | 1.5 |
| Ex. 5 | $93.5 \times 10^4$ | 8 | 49 | 13.5 | 2.1 | 2.4 |
| Ex. 6 | $83.5 \times 10^4$ | 4 | 45 | 15.0 | 2.0 | 0.9 |
| Ex. 7 | $89.9 \times 10^4$ | 3 | 60 | 14.0 | 0.7 | 4.8 |
| CE 1 | $67.8 \times 10^4$ | 23 | 52 | 14.1 | Dropped at 32 min. | 18.4 |
| CE 2 | $74.7 \times 10^4$ | 1 | 46 | 15.5 | Dropped at 36 min. | 0.9 |
| CE 3 | $94.4 \times 10^4$ | 7 | 39 | 14.0 | Dropped at 3 min. | 0.5 |
| Ex. = Example, CE = Comparative Example | | | | | | |

As shown in Table 2, the pressure-sensitive adhesive sheets according to examples 1 through 7 formed of a pressure-sensitive adhesive composition, in which the weight average molecular weight of the acrylic polymer (Mw) was $70 \times 10^4$ or greater, but $100 \times 10^4$ or less, the gel fraction of the acrylic polymer (Ga) was 3% or greater, but 15% or less, and the gel fraction of the post-crosslinking pressure-sensitive adhesive agent (Gb) was 40% or greater, but 63% or less, all had an adhesive strength of 12.0 N/20 mm or greater (even 13.0 N/20 mm or greater), did not fall off during the measurement of the high temperature holding power (and the degree of displacement after 1 hour was 2.5 mm or less), and showed 5 mm or less in height in the edge peeling test. Namely, the pressure-sensitive adhesive sheets according to examples 1 through 7 provided high level of pressure-sensitive adhesive force, high temperature holding power and edge peeling resistance in a well-balanced manner. Among these sheets, the pressure-sensitive adhesive sheets according to examples 1, 3, 4, 5 and 6 wherein Mw was $80 \times 10^4$ or greater, but $99 \times 10^4$ or less, Ga was 3% or greater, but 15% or less, and Gb was 45% or greater, but 55% or less, all showed superb results; i.e., showed an adhesive strength of 13.5 N/20 mm or greater, did not fall off during the measurement of high temperature holding power, and showed a height of 3 mm or less in the edge peeling test.

By contrast, the pressure-sensitive adhesive sheets according to comparative examples 1 through 3, in which at least one of Mw, Ga and Gb was out of the above-mentioned range, were inferior in the balance of the three properties (pressure-sensitive adhesive force, high temperature holding power and edge peeling resistance) to the pressure-sensitive adhesive sheets according to the examples of the present invention.

As described above, an aqueous pressure-sensitive adhesive composition according to the present invention or an aqueous pressure-sensitive adhesive composition produced by a method according to the present invention can provide an pressure-sensitive adhesive layer which realizes high level of pressure-sensitive adhesive force, high temperature holding power and edge peeling resistance in a well-balanced manner. For example, a pressure-sensitive adhesive sheet having a pressure-sensitive adhesive layer which is relatively thick (for example, having a thickness of about 50 $\mu$m to 100 $\mu$m) and realizes all the above three properties at a high level can be produced. The composition according to the present invention is preferable to be used for producing a pressure-sensitive adhesive sheets having such pressure-sensitive adhesive layer, for example, double-faced pressure-sensitive adhesive sheet (including a double-faced pressure-sensitive adhesive tape). Using the composition according to the present invention, can be produced a pressure-sensitive adhesive sheet which has pressure-sensitive adhesive force, cohesive strength under high temperature conditions, and surface following ability (adhesiveness to a curved surface) in a highly balanced manner. Such a pressure-sensitive adhesive sheet is preferably used as a pressure-sensitive adhesive tape for interior furnishing in vehicles (for example, double-faced pressure-sensitive adhesive tape for fixing interior furnishing in vehicles), utilizing such characteristics.

**Claims**

1. A method for producing an aqueous pressure-sensitive adhesive composition containing an acrylic polymer as a main component, which is dispersed in water, the method comprising:

   subjecting a monomer material containing alkyl (meth)acrylate as a main monomer to emulsion polymerization to obtain an aqueous emulsion of the acrylic polymer, wherein the emulsion polymerization is carried out so as to obtain an acrylic polymer in which the mass ratio of the ethyl acetate-insoluble matter of the acrylic polymer is 3% or greater, but 15% or less and weight average molecular weight of the tetrahydrofran-soluble matter of the acrylic polymer is $70 \times 10^4$ or greater, but $100 \times 10^4$ or less; and
   adding a crosslinking agent to the aqueous emulsion to obtain an aqueous pressure-sensitive adhesive composition, wherein the crosslinking agent is added such that the mass ratio of the ethyl acetate-insoluble matter with respect to the post-crosslinking pressure-sensitive adhesive formed of the pressure-sensitive adhesive composition is 40% or greater, but 70% or less.

2. A method according to claim 1, wherein:

   the emulsion polymerization is carried out by a method comprising:

   supplying a first polymerization material containing a part of the monomer material to a reaction vessel and starting polymerization; and
   after the start of polymerization, supplying a second polymerization material containing another part of the monomer material and having a different composition from that of the first polymerization material to the reaction vessel to undergo polymerization.

3. A method according to claim 2, wherein:

   the first polymerization material and the second polymerization material contain chain transfer agent of the same or different types, and concentrations of the chain transfer agents are set so as to fulfill $C_1 < C_2$ in the following expressions:

   Concentration of Chain Transfer Agent in First Polymerization Material $(C_1)[\%] =$

   (Mass of Chain Transfer Agent Contained in First Polymerization Material/Mass of Monomer Material Contained in First Polymerization Material) $\times$ 100; and

Concentration of Chain Transfer Agent in Second Polymerization Material

$(C_2)[\%]$ = (Mass of Chain Transfer Agent Contained in Second Polymerization Material/Mass of Monomer Material Contained in Second Polymerization Material) × 100.

4. A method according to claim 3, wherein the concentration of chain transfer agent in the second polymerization material $(C_2)$ is 1.1 to 3 times the concentration of chain transfer agent in the first polymerization material $(C_1)$.

5. A method according to any one of claims 2 to 4, wherein the first polymerization material and the second polymerization material contain chain transfer agent of the same or different types, and 10 to 45% by mass of the total amount of chain transfer agent used for the emulsion polymerization is contained in the first polymerization material.

6. A method according to any one of claims 2 to 5, wherein the mass of chain transfer agent contained in the first polymerization material corresponds to 0.003 to 0.02% of the total amount of monomer material.

7. A method according to according to any one of claims 2 to 6, wherein 20 to 60% by mass of the total amount of monomer material is contained in the first polymerization material, and the remaining amount of the monomer material is contained in the second polymerization material.

8. A method according to any one of Claims 1 to 7, further comprising adding a tackifier to the aqueous emulsion at a ratio of 5 to 30 parts by mass with respect to 100 parts by mass of the acrylic polymer contained in the emulsion.

9. An aqueous pressure-sensitive adhesive composition containing acrylic polymer as a main component, which is dispersed in water, the composition comprising:

an aqueous emulsion wherein the acrylic polymer is dispersed in water, the acrylic polymer being obtained by polymerization of monomer material containing alkyl (meth)acrylate as a main monomer, and a mass ratio of the ethyl acetate-insoluble matter of the acrylic polymer is 3% or greater, but 15% or less and a weight average molecular weight of the tetrahydrofran-soluble matter of the acrylic polymer is $70 \times 10^4$ or greater, but $100 \times 10^4$ or less; and
a crosslinking agent contained in the aqueous emulsion such that a mass ratio of the ethyl acetate-insoluble matter of a post-crosslinking pressure-sensitive adhesive formed of the pressure-sensitive adhesive composition is 40% or greater, but 70% or less.

10. A composition according to claim 9, further comprising a tackifier at a ratio of 5 to 30 parts by mass with respect to 100 parts by mass of the acrylic polymer.

11. A pressure-sensitive adhesive sheet including a pressure-sensitive adhesive layer formed using the composition according to claim 9 or 10.

Fig. 1

11

3
2
1
2
3

Fig. 2

12

2
1
2
3

Fig. 3

13

3
2
3

Fig. 4

14

2
3

Fig. 5

15

3
2
1

Fig. 6

16

2
1

European Patent
Office

**EUROPEAN SEARCH REPORT**

Application Number

EP 07 01 5016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 447 434 A (NITTO DENKO CORP [JP]) 18 August 2004 (2004-08-18) * examples * * paragraphs [0019], [0022], [0025], [0029] * ----- | 1-3,7-11 | INV. C09J133/08 C09J133/10 C08F2/22 |
| X | US 2004/116598 A1 (GUO JONG-SHING [US] ET AL) 17 June 2004 (2004-06-17) * examples * ----- | 1,2,7-11 | |
| X | EP 0 745 653 A (NEW OJI PAPER CO LTD [JP]) 4 December 1996 (1996-12-04) * examples * ----- | 1,2,7-11 | |
| A | US 5 196 504 A (SCHOLZ WILLIAM F [US] ET AL) 23 March 1993 (1993-03-23) * claims; examples * * column 4, lines 9-28 * * column 2, lines 36-38 * ----- | 1-11 | |
| | | | TECHNICAL FIELDS SEARCHED (IPC) C09J C08F |

The present search report has been drawn up for all claims

| Place of search | Date of completion of the search | Examiner |
|---|---|---|
| Munich | 21 November 2007 | Simmerl, Reinhold |

EPO FORM 1503 03.82 (P04C01)

**ANNEX TO THE EUROPEAN SEARCH REPORT
ON EUROPEAN PATENT APPLICATION NO.**                    EP 07 01 5016

This annex lists the patent family members relating to the patent documents cited in the above-mentioned European search report.
The members are as contained in the European Patent Office EDP file on
The European Patent Office is in no way liable for these particulars which are merely given for the purpose of information.

21-11-2007

| Patent document cited in search report | | Publication date | Patent family member(s) | | Publication date |
|---|---|---|---|---|---|
| EP 1447434 | A | 18-08-2004 | CN | 1521230 A | 18-08-2004 |
| | | | KR | 20040073253 A | 19-08-2004 |
| | | | SG | 121782 A1 | 26-05-2006 |
| US 2004116598 | A1 | 17-06-2004 | NONE | | |
| EP 0745653 | A | 04-12-1996 | AU | 688646 B2 | 12-03-1998 |
| | | | AU | 4188796 A | 03-07-1996 |
| | | | WO | 9618703 A1 | 20-06-1996 |
| | | | JP | 3344613 B2 | 11-11-2002 |
| | | | JP | 8218040 A | 27-08-1996 |
| | | | US | 5851662 A | 22-12-1998 |
| US 5196504 | A | 23-03-1993 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006212404 A
- JP 2004189933 A
- JP 2150482 A
- JP 2003073637 A
- JP 8165464 A